# EUROPEAN PATENT APPLICATION

(11) **EP 4 502 055 A1**
(43) Date of publication of application: **05.02.2025**
(21) Application number: 23780475.2
(22) Date of filing: 28.03.2023
(51) Int. Cl.: C08L 59/00, C08F 265/06, C08J 3/16, C08L 51/04, C08L 63/00

(54) **MODIFIER FOR POLYACETAL RESIN, POLYACETAL RESIN COMPOSITION, AND METHOD FOR PRODUCING MODIFIER FOR POLYACETAL RESIN**

(30) Priority: 29.03.2022 JP 2022053756
(71) Applicant: Kaneka Corporation, Osaka-shi, Osaka 530-8288 (JP); GLOBAL POLYACETAL CO., LTD., Tokyo 105-0021 (JP)
(72) Inventor: YAMAMOTO, Yuuta, Hiratsuka-shi, Kanagawa 254-0016 (JP); ISHII, Takashi, Hiratsuka-shi, Kanagawa 254-0016 (JP); SONOYAMA, Arisa, Takasago-shi, Hyogo 676-8688 (JP); YAMAMOTO, Tetsuro, Takasago-shi, Hyogo 676-8688 (JP)
(74) Representative: Vossius & Partner Patentanwälte Rechtsanwälte mbB
(86) International application number: PCT/JP2023/012410
(87) International publication number: WO 2023/190466

(57) **Abstract**

An object is to provide a novel polyacetal resin impact resistance modifier that can provide a polyacetal resin composition which achieves low VOC emissions. Provided is a polyacetal resin modifier including a rubber-containing graft copolymer (A) that has a specific configuration and a polymer compound (B) that has a glycidyl group. A contained amount of elemental chlorine and a contained amount of elemental calcium in the modifier are within specific ranges. A mixture of the modifier and pure water has a pH within a specific range.

## Description

### Technical Field

The present invention relates to a polyacetal resin modifier, a polyacetal resin composition, and a method for producing a polyacetal resin modifier.

### Background Art

Polyacetal resin is an engineering plastic having crystallinity and has excellent strength, slidability, and dimensional stability due to the high crystallinity thereof. As such, polyacetal resin is used not only in housings, but in a wide variety of applications, such as electric/electronic components, automotive components, and the like, including resin gears, doorknobs, and clips. Such resin parts are required to have high impact resistance, low abrasion properties, low noise properties, and the like. Among these, high impact resistance is considered particularly important.

Furthermore, recently, with regard to automotive components, there is a need for resin parts that achieve low volatile organic compound (VOC) emissions. Thus, there is a need for a resin composition that achieves low VOC emissions.

Currently, various polyacetal modifiers and resin compositions containing such modifiers are being developed.

For example, Patent Literature 1 discloses a composition containing polyoxymethylene, an epoxidized fatty acid, a polymer stabilizer, and an impact resistance modifier.

Patent Literature 2 discloses a rubbery graft polymer that contains a rubbery portion containing a diene structural unit. In the rubbery graft polymer disclosed in Patent Literature 2, the mass ratio of the rubbery portion and the graft portion is such that the rubbery portion accounts 70% by mass to 90% by mass, and the graft portion accounts for 10% by mass to 30% by mass. Furthermore, regarding the rubbery graft polymer disclosed in Patent Literature 2, the total amount of sulfate ions and sulfurous acid ions in water obtained by hot water extraction via a specific method is not more than 3.5 ppm, the contained amount of chlorine ions is not more than 150 ppm, and the total contained amount of sodium ions and potassium ions with respect to the total amount of the rubbery graft polymer is not more than 20 ppm.

Patent Literature 3 discloses a polyoxymethylene resin composition characterized by containing 100 parts by mass of a polyoxymethylene resin (A) and 0.5 to 50 parts by mass of a modifier (B), the modifier (B) containing thermoplastic polyurethane (b-1) and a graft rubber copolymer (b-2), the graft rubber copolymer (b-2) having a structure with two or more layers.

Patent Literature 4 discloses a resin composition including a polyacetal resin (A), a salt (B) that is constituted by carboxylic acid and an alkali-earth metal, and a rubber-containing graft copolymer (C).

Patent Literature 5 discloses a polyacetal resin composition containing, in specific amounts, (A) a polyacetal polymer, (B) a hindered phenol-based antioxidant, (C) aliphatic carboxylic acid hydrazide, (D) a hydantoin compound having two hydrazino carbonyl alkyl groups, (E) an alkali-earth metal salt of aliphatic carboxylic acid, (F) a hindered amine compound, (G) an ultraviolet absorbing agent, and (H) a core-shell polymer having a rubber-like polymer core and a glass-like polymer shell that is made of a vinyl-based copolymer.

There is also, for example, technology such as that in Patent Literature 6, but there is a need for an improvement in the balance between impact strength, VOCs, and weather resistance.

### Citation List

### [Patent Literature]

[Patent Literature 1]
   Published Japanese Translation of PCT International Application, Tokuhyo, No. 2008-504397
[Patent Literature 2]
   Japanese Patent Application Publication, Tokukai, No. 2016-000828
[Patent Literature 3]
   Japanese Patent Application Publication, Tokukai, No. 2019-026810
[Patent Literature 4]
   PCT International Publication No. WO 2016/136726
[Patent Literature 5]
   Japanese Patent Application Publication, Tokukai, No. 2021-036018
[Patent Literature 6]
   Japanese Patent Application Publication, Tokukai, No. 2014-177647

### Summary of Invention

### Technical Problem

However, the conventional art described above is not sufficient in terms of VOC emissions, and has room for further improvements.

An embodiment of the present invention has been made in view of the above problem. An objective thereof is to provide a novel polyacetal resin modifier that can provide a polyacetal resin composition which has good weather resistance and which achieves low VOC emissions.

### Solution to Problem

As a result of diligent research in order to solve the above problem, the inventors of the present invention completed the present invention after novelly finding that an impact resistance modifier for polyacetal resin which satisfies conditions (A1) to (A3) below results in low VOC emissions. (A1): The modifier contains a rubber-containing graft copolymer that has a specific component and a polymer compound that has a glycidyl group. (A2): The modifier has an elemental chlorine concentration and an elemental calcium concentration that are within specific ranges. (A3): The modifier exhibits a pH that is in a specific range.

In other words, a polyacetal resin modifier in accordance with an embodiment of the present invention is a polyacetal resin modifier including: a rubber-containing graft copolymer (A); and a polymer compound (B) that has a glycidyl group, the rubber-containing graft copolymer (A) having an elastic body and a graft part which is grafted to the elastic body, the graft part being constituted only by a structural unit which is derived from a vinyl-based monomer that does not have a reactive functional group, a mass ratio (parts by mass of the elastic body / parts by mass of the graft part) of the elastic body and the graft part being 60/40 to 95/5, a contained amount of elemental chlorine in the polyacetal resin modifier being 1 ppm to 170 ppm with respect to mass of the polyacetal resin modifier, a contained amount of elemental calcium in the polyacetal resin modifier being 1 ppm to 780 ppm with respect to the mass of the polyacetal resin modifier, a mixture that is constituted by 10 parts by mass of the polyacetal resin modifier and 100 parts by mass of deionized water having a pH of 6.0 to 8.0.

Furthermore, a method for producing a polyacetal resin modifier in accordance with an embodiment of the present invention is a method for producing a polyacetal resin modifier, including: a polymer compound (B) addition step of adding a polymer compound (B), having a glycidyl group, and which is in an emulsified state, to an aqueous latex which contains a rubber-containing graft copolymer (A); a coagulation step of adding calcium chloride to the aqueous latex which is obtained from the polymer compound (B) addition step, thereby obtaining coagulated material which contains the rubber-containing graft copolymer (A) and the polymer compound (B); and a washing step of washing the coagulated material which is obtained in the coagulation step, said rubber-containing graft copolymer (A) having an elastic body and a graft part which is grafted to the elastic body, said graft part being constituted only by a structural unit which is derived from a vinyl-based monomer that does not have a reactive functional group, a mass ratio (parts by mass of the elastic body / parts by mass of the graft part) of the elastic body and the graft part being 60/40 to 95/5, the aqueous latex having a pH of 5 to 9.

### Advantageous Effects of Invention

An embodiment of the present invention brings about the effect of making it possible to provide a novel polyacetal resin modifier that can provide a polyacetal resin composition which has good weather resistance, and which achieves low VOC emissions.

### Description of Embodiments

The following description will discuss embodiments of the present invention. The present invention is not, however, limited to these embodiments. The present invention is not limited to the configurations described below but may be altered in various ways within the scope of the claims. The present invention also encompasses, in its technical scope, any embodiment or example derived by combining technical means disclosed in differing embodiments and Examples. Further, it is possible to form a new technical feature by combining the technical means disclosed in various embodiments. All academic and patent documents cited in the present specification are incorporated herein by reference. Any numerical range expressed as "A to B" in the present specification means "not less than A and not more than B (i.e., a range from A to B which includes both A and B)" unless otherwise stated.

In the present specification, a repeating unit derived from an N monomer may also be referred to as an "N unit". A repeating unit can also be said to be a structural unit.

Furthermore, in the present specification, unless stated otherwise, a copolymer including an M¹ unit, an M² unit, ... and an Mⁿ unit as structural units thereof (where n is an integer of not less than 2) may also be referred to as an M¹/M²/... /Mn copolymer. The M¹/M²/ ... /Mⁿ copolymer is not particularly limited in terms of the manner of polymerization, except when explicitly indicated otherwise, and may be a random copolymer, may be an alternating copolymer, may be a block copolymer, and may be a graft copolymer. Furthermore, in the present specification, unless stated otherwise, an elastomer including an M¹ unit, an M² unit, ... and an Mⁿ unit as structural units thereof (where n is an integer of not less than 2) may also be referred to as an M¹/M²/ ... /Mⁿ rubber.

### [1. Technical idea of an embodiment of the present invention]

Examples of the aforementioned VOCs include formaldehyde. VDA275, which is a German automotive standard, discloses a method for measuring formaldehyde emitted from a resin part (molded product). Recently, there has been discussion regarding VOC emissions as measured by a unified measurement method for based on such standards.

Polyacetal resin is sensitive to the pH of an additive and/or a residual ion amount. Depending on the pH and/or residual ion amount, the polyacetal may decompose during processing of polyacetal resin, and formaldehyde, which is toxic to the human body, may be produced. Because the additive and/or residual ions remain in a molded product of the polyacetal resin, the formaldehyde emitted from a molded product of the polyacetal resin becomes problematic in a sealed space. At the same time, various properties (for example, impact resistance) may be necessary in polyacetal. Therefore, as a polyacetal resin modifier, there is a need for a modifier suitable for various purposes, such as improvement of impact resistance. In a case where a modifier produced using an anionic emulsifier and a coagulant is added to polyacetal resin, there are high formaldehyde emissions from a resulting polyacetal resin composition or from a molded product thereof. This amount of formaldehyde is not acceptable particularly for automotive applications. For example, regarding the modifiers of Patent Literatures 1 to 6, in a case where the modifiers are blended in polyacetal resin, it was not possible to sufficiently prevent or reduce VOC emissions when molding a polyacetal resin composition.

As such, the inventors of the present invention performed diligent research toward the object of providing a polyacetal resin modifier that can provide a polyacetal resin composition which achieves low VOC emissions. As a result, the inventors completed the present invention after novelly finding that an impact resistance modifier for polyacetal resin which satisfies the conditions (A1) to (A3) achieves low VOC emissions even when blended with polyacetal resin, as described above.

In addition to the above objective, an embodiment of the present invention also has the following objectives (a), (b), and/or (c) as additional objectives which are preferably achieved: (a) providing a polyacetal resin modifier that is useful in achieving, at a higher level, both high impact resistance of polyacetal resin and low formaldehyde emissions; (b) providing a polyacetal resin modifier that prevents or reduces formaldehyde which is emitted during and after molding of a polyacetal resin composition (including a resultant molded product) and that can provide impact resistance, and also a polyacetal resin composition that includes the polyacetal resin modifier; and (c) providing a polyacetal resin modifier that can provide a molded product having excellent softness, and a polyacetal resin composition that includes the same.

As a result of diligent research in order to achieve the additional objectives, the inventors of the present invention found that using a specific polyacetal resin modifier makes it possible to achieve, at a higher level, both high impact resistance of a polyacetal resin composition and prevention or reduction of the amount of VOC during and after molding.

An embodiment of the present invention makes it possible to provide: (a) a polyacetal resin modifier that includes a rubber-containing graft copolymer, and that is useful in achieving, at a higher level, both impact resistance of polyacetal resin and prevention or reduction of formaldehyde emissions; (b) a polyacetal resin modifier that prevents or reduces formaldehyde emissions during and after molding of polyacetal resin composition and that can provide impact resistance, and also a polyacetal resin composition that includes the polyacetal resin modifier; and/or (c) a polyacetal resin modifier that can provide a molded product having excellent softness, and a polyacetal resin composition that includes the same.

### [2. Polyacetal resin modifier]

A polyacetal resin modifier in accordance with an embodiment of the present invention is a polyacetal resin modifier including: a rubber-containing graft copolymer (A); and a polymer compound (B) that has a glycidyl group, the rubber-containing graft copolymer (A) having an elastic body and a graft part which is grafted to the elastic body, the graft part being constituted only by a structural unit which is derived from a vinyl-based monomer that does not have a reactive functional group, a mass ratio (parts by mass of the elastic body / parts by mass of the graft part) of the elastic body and the graft part being 60/40 to 95/5, a contained amount of elemental chlorine in the polyacetal resin modifier being 1 ppm to 170 ppm with respect to mass of the polyacetal resin modifier, a contained amount of elemental calcium in the polyacetal resin modifier being 1 ppm to 780 ppm with respect to the mass of the polyacetal resin modifier, a mixture that is constituted by 10 parts by mass of the polyacetal resin modifier and 100 parts by mass of deionized water having a pH of 6.0 to 8.0.

The "polyacetal resin modifier" may be hereinafter referred to as a "modifier". The "polyacetal resin modifier in accordance with an embodiment of the present invention" may hereinafter be referred to as "the present modifier". Mixing the present modifier with a polyacetal resin (C) described later provides a polyacetal resin composition. The "polyacetal resin composition" may hereinafter be referred to as a "resin composition".

By being configured as above, the present modifier has the advantage of making it possible to provide a polyacetal resin composition which achieves low VOC emissions. Specifically, the present modifier can provide the polyacetal resin composition which achieves low VOC emissions during and after molding of the polyacetal resin composition. Furthermore, the present modifier has the advantage of making it possible to provide a polyacetal resin composition which has excellent weather resistance and a polyacetal resin composition which can provide a molded product that has excellent weather resistance. Furthermore, the present modifier has the advantage of making it possible to provide a polyacetal resin composition which can provide a molded product that has excellent impact resistance. Furthermore, the present modifier has the advantage of making it possible to achieve, at a high level, both (a) high impact resistance of a molded product of the polyacetal resin composition and (b) prevention or reduction of VOC emissions during and after molding of the polyacetal resin composition. Furthermore, the present modifier has the advantage of making it possible to provide a polyacetal resin composition which can provide a molded product that has excellent softness. Note that in the technical field of polyacetal resins and polyacetal resin compositions, formaldehyde emissions can be most problematic in terms of VOC emissions. Therefore, in an embodiment of the present invention, VOC refers to formaldehyde.

In the present specification, the weather resistance of the resin composition and the molded product is evaluated via the time to crack occurrence in a weather resistance test performed on the resin composition and the molded product. In the present specification, the impact resistance of the molded product is evaluated via the notched Charpy impact value of the molded product. In the present specification, the softness of the molded product is evaluated via the flexural modulus of the molded product. The measurement method for the time to crack occurrence during the weather resistance test of the resin composition and the molded product, and the measurement methods for the notched Charpy impact value and the flexural modulus of the molded product are described later in detail in the Examples.

### (2-1. Rubber-containing graft copolymer (A))

A rubber-containing graft copolymer (A) contained in the present modifier has an elastic body and a graft part grafted to the elastic body.

### (Elastic body)

Examples of the elastic body include elastic bodies that contain at least one selected from the group consisting of natural rubbers, diene-based rubbers, (meth)acrylate-based rubbers, and polyorganosiloxane-based rubbers. The elastic body preferably contains at least one selected from the group consisting of diene-based rubbers, (meth)acrylate-based rubbers, and polyorganosiloxane-based rubbers, more preferably contains a (meth)acrylate-based rubber, and is even more preferably constituted only by a (meth)acrylate-based rubber. This configuration provides the advantage of making it possible to maintain excellent weather resistance of the polyacetal resin composition.

### ((Meth)acrylate-based rubber)

The (meth)acrylate-based rubber is an elastic body containing, as a structural unit, a structural unit ((meth)acrylate-based unit) derived from a (meth)acrylate-based monomer.

In the present specification, "(meth)acrylate" means "methacrylate" and/or "acrylate", and "(meth)acrylic acid" means "methacrylic acid" and/or "acrylic acid". For example, "methyl (meth)acrylate" means "methyl methacrylate" and/or "methyl acrylate".

Examples of the (meth)acrylate-based monomer encompass: (a) alkyl ester (meth)acrylates having an alkyl group with 1 to 22 carbon atoms, such as methyl (meth)acrylate, ethyl (meth)acrylate, propyl (meth)acrylate, butyl (meth)acrylate, 2-ethylhexyl (meth)acrylate, octyl (meth)acrylate, dodecyl (meth)acrylate, dodecyl (meth)acrylate, stearyl (meth)acrylate, and behenyl (meth)acrylate; (b) aromatic ring-containing (meth)acrylates such as phenoxyethyl (meth)acrylate and benzyl (meth)acrylate; (c) hydroxyalkyl (meth)acrylates such as 2-hydroxyethyl (meth)acrylate and 4-hydroxybutyl (meth)acrylate; (d) glycidyl (meth)acrylates such as glycidyl (meth)acrylate and glycidyl alkyl (meth)acrylate; and (e) alkoxy alkyl (meth)acrylates. These (meth)acrylate-based monomers may be used alone or in combination of two or more.

The (meth)acrylate-based rubber may further include, as a structural unit thereof, a structural unit derived from a vinyl-based monomer other than a (meth)acrylate-based monomer which is copolymerizable with a (meth)acrylate-based monomer. Examples of the vinyl-based monomer other than a (meth)acrylate-based monomer which is copolymerizable with a (meth)acrylate-based monomer include (a) diene-based monomers and (b) vinyl-based monomers other than (meth)acrylate-based monomers.

The (meth)acrylate-based rubber preferably further includes a structural unit derived from a crosslinking agent and/or a grafting agent. In other words, it is preferable to use a crosslinking agent and/or a grafting agent in the process of producing the (meth)acrylate-based rubber. In a case where the (meth)acrylate-based rubber further includes a structural unit derived from a crosslinking agent and/or grafting agent, a graft rate (described later) increases. This results in the advantage that, in a polyacetal resin composition obtained by kneading the modifier and the polyacetal resin, dispersibility of the rubber-containing graft copolymer (A) in the polyacetal resin is good.

Examples of the crosslinking agent and the grafting agent include: (a) allylalkyl (meth)acrylates such as allyl (meth)acrylate and allyl alkyl (meth)acrylate; (b) polyfunctional (meth)acrylates such as monoethylene glycol di(meth)acrylate, triethylene glycol di(meth)acrylate, and tetraethylene glycol di(meth)acrylate; and (c) polyfunctional monomers such as diallylphthalate, triallyl cyanurate, triallyl isocyanurate, and divinylbenzene. These crosslinking agents and grafting agents may be used alone or in combination of two or more.

Suitable examples of the (meth)acrylate-based rubber include acrylate-based rubbers such as polybutylacrylate rubbers and a butylacrylate/2-ethylhexyl acrylate copolymer. The polybutylacrylate rubber is an elastic body containing 50% by mass to 100% by mass of a butylacrylate unit in 100% by mass of structural units thereof.

Examples of the diene-based rubbers and the polyorganosiloxane-based rubbers include conventionally known rubbers (for example, butadiene rubbers and silicone rubbers, respectively).

In an embodiment of the present invention, the elastic body preferably contains a butylacrylate unit in an amount of preferably not less than 50% by mass, more preferably not less than 60% by mass, more preferably not less than 70% by mass, even more preferably not less than 80% by mass, still more preferably not less than 90% by mass, and particularly preferably not less than 95% by mass, in 100% by mass of the elastic body. This configuration has the advantage of providing a good balance between economic efficiency, weather resistance, and low elastic modulus.

The "elastic body" of the rubber-containing graft copolymer (A) may be composed of only one type of elastic body (polymer) which has an identical structural unit composition. The "elastic body" of the rubber-containing graft copolymer (A) may be composed of a plurality of types of elastic bodies (polymers) having different respective structural unit compositions.

### (Graft part)

The graft part is constituted only by a structural unit derived from a vinyl-based monomer that does not have a reactive functional group (for example, a hydroxy group, carboxy group, an epoxy group, an amide group, or an oxirane group). In the present specification, the "structural unit derived from a vinyl-based monomer that does not have a reactive functional group" may hereinafter be referred to as a "structural unit U". This configuration in which the graft part is constituted only by the structural unit U has the advantage that it is possible to eliminate (a) reactions between reactive functional groups of the rubber-containing graft copolymer (A) and (b) reactions between polyacetal resin and reactive functional groups in the polyacetal resin composition, and that gloss of a molded product surface will not be decreased.

Examples of the vinyl-based monomer which does not have a reactive functional group and from which the structural unit U is derived include aromatic vinyl compounds which do not have a reactive functional group (for example, styrene-based monomers such as styrene), vinyl cyanide compounds which do not have a reactive functional group (for example, acrylonitrile and methacrylonitrile), and unsaturated carboxylic acid esters which do not have a reactive functional group.

Suitable examples of the unsaturated carboxylic acid esters that do not have a reactive functional group include methacrylic acid esters having an alkyl ester with 1 to 12 carbon atoms and acrylic acid esters having an alkyl ester with 1 to 12 carbon atoms. More specific examples of the unsaturated carboxylic acid esters that do not have a reactive functional group include methyl acrylate, methyl methacrylate, ethyl acrylate, ethyl methacrylate, butyl acrylate, and butyl methacrylate.

Suitable examples of the vinyl-based monomer that does not have a reactive functional group also include ester (meth)acrylates that have an alkoxyl group and that have an alkyl group having 1 to 22 carbon atoms, such as methoxymethyl (meth)acrylate, methoxyethyl (meth)acrylate, ethoxymethyl (meth)acrylate, and ethoxyethyl (meth)acrylate.

In polymerization of the graft part, when selecting a monomer to be used, it is preferable to consider the type of polyacetal resin (C) that is subject to blending (i.e., that is subject to modification) with the modifier which includes the rubber-containing graft copolymer (A) which is obtained. For example, when selecting the monomer in polymerization of the graft part, it is preferable to discretionarily select one type of monomer or to discretionarily combine and use two or more types of monomers at a discretionarily selected mixing ratio, with consideration of, for example, (a) compatibility between the polyacetal resin (C) and the rubber-containing graft copolymer (A) which is obtained, and (b) refractive index of the polyacetal resin composition obtained by blending, with the polyacetal resin (C), the modifier that includes the rubber-containing graft copolymer (A).

The structural units U of the graft part are: preferably constituted only by structural units derived from one or more types of monomer selected from the group consisting of (meth)acrylate-based monomers and styrene-based monomers; more preferably constituted only by structural units derived from one or more types of monomer selected from the group consisting of methyl acrylate, methyl methacrylate, ethyl acrylate, butylacrylate, and styrene-based monomers; more preferably constituted only by structural units derived from one or more types of monomer selected from the group consisting of methyl acrylate, methyl methacrylate, ethyl acrylate, butylacrylate, and styrene; even more preferably constituted only by structural units derived from one or more types of monomer selected from the group consisting of methyl acrylate, methyl methacrylate, ethyl acrylate, and butylacrylate; particularly preferably constituted only by structural units derived from at least one selected from among methyl methacrylate and butylacrylate; and most preferably constituted only by structural units derived from methyl methacrylate and structural units derived from butylacrylate. This configuration has the advantages that good granulation is achieved during production of the rubber-containing graft copolymer (A), that it is possible to obtain a rubber-containing graft copolymer (A) which has little odor, and that a molded product of a resultant polyacetal resin composition has excellent weather resistance.

The graft part preferably contains structural units derived from methyl methacrylate and structural units derived from butylacrylate in a total amount of not less than 50% by mass, more preferably not less than 70% by mass, even more preferably not less than 85% by mass, and particularly preferably not less than 95% by mass, in 100% by mass of the graft part. This configuration has the advantage of achieving good granulation of the rubber-containing graft copolymer (A) during production thereof.

The "graft part" of the rubber-containing graft copolymer (A) may be composed of only one type of graft part (polymer) which has an identical structural unit composition. The "graft part" of the rubber-containing graft copolymer (A) may be composed of a plurality of types of graft part (polymers) having different respective structural unit compositions.

The mass ratio of the elastic body and the graft part (parts by mass of elastic body / parts by mass of graft part) in the rubber-containing graft copolymer (A) is 60/40 to 95/5, preferably 65/35 to 90/10, more preferably 70/30 to 85/15, even more preferably 70/35 to 80/20, and particularly preferably 70/35 to 75/25. This configuration has the advantage of achieving excellent compatibility between the polyacetal resin (C) and the rubber-containing graft copolymer (A) in the modifier, and achieving excellent impact resistance of a molded product of the polyacetal resin composition.

### (Method for producing rubber-containing graft copolymer (A))

A method for producing for rubber-containing graft copolymer (A) may be any of bulk polymerization, solution polymerization, suspension polymerization, and emulsion polymerization, but is preferably emulsion polymerization, i.e., emulsion graft polymerization. One specific example is as follows: (1) water and an emulsifier are added to a reactor provided with a stirrer, a monomer mixture for elastic body formation and a polymerization initiator are further added, a chain transfer agent and/or a redox agent are added as necessary, the resultant raw material solution is heated, stirred, and polymerized to form an elastic body; and, thereafter, (2) a monomer mixture for graft part formation is added to a reaction solution (suspension) containing the elastic body, and an emulsifier, a polymerization initiator, a chain transfer agent, and/or a redox agent are further added to the reaction solution as necessary, and the reaction solution is heated, stirred, and polymerized, so that a graft part is formed.

The types of emulsifier, polymerization initiator, chain transfer agent, and redox agent used here are not particularly limited. Known types of these may be used. Furthermore, the method of adding each raw material to the reactor is not particularly limited. Each raw material may be added in a single addition prior to commencement of polymerization, or may be added in a divided manner. Furthermore, the polymerization of the graft part may be performed in one or more stages, and a monomer composition at each stage may be the same or different. In the polymerization of the graft part, the monomer for forming the graft part may be added in one addition over a short time, may be added continuously in certain amounts over a certain time, or a combination of these may be performed.

In a case where an emulsion polymerization method is used as the method for producing the rubber-containing graft copolymer (A), a known polymerization initiator may be used, for example, known pyrolytic polymerization initiators such as 2,2'-azobisisobutyronitrile, hydrogen peroxide, potassium persulfate, and ammonium persulfate.

In the production of the rubber-containing graft copolymer (A), a redox initiator can also be used. The redox initiator is an initiator which contains a combination of (a) a peroxide such as an organic peroxide and/or an inorganic peroxide and (b) as necessary a reducing agent such as sodium formaldehyde sulfoxylate and/or glucose, as necessary a transition metal salt such as iron (II) sulfate, as necessary a chelating agent such as disodium ethylenediaminetetraacetate, and/or as necessary a phosphorus-containing compound such as sodium pyrophosphate. Examples of the organic peroxide encompass t-butylperoxy isopropyl carbonate, paramenthane hydroperoxide, cumene hydroperoxide, dicumyl peroxide, t-butyl hydroperoxide, di-t-butyl peroxide, and t-hexyl peroxide. Examples of the inorganic peroxide encompass hydrogen peroxide, potassium persulfate, and ammonium persulfate.

In the production of the rubber-containing graft copolymer (A), a surfactant can be further used, in addition to the above-described components. The type and the amount of the surfactant used are set within known ranges.

In the production of the rubber-containing graft copolymer (A), conditions of polymerization such as polymerization temperature, pressure, and deoxygenation can be set within known ranges.

### (2-2. Polymer compound (B) having glycidyl group)

The present modifier contains a polymer compound (B) having a glycidyl group. The polymer compound (B) having the glycidyl group can play a large role in the modifier providing a polyacetal resin composition that achieves low VOC emissions. In the present specification, the "polymer compound (B) having a glycidyl group" may hereinafter be referred to simply as "polymer compound (B)".

Formaldehyde that can be produced (a) during molding of a polyacetal resin composition, for example, when extruding and further performing a molding process on the polyacetal resin composition, and/or (b) after molding of the polyacetal resin composition can further oxidize to become formic acid. Formic acid further promotes the decomposition of a polyacetal resin composition, i.e., the production of formaldehyde. When a modifier containing the polymer compound (B) is blended with a polyacetal resin composition, the polymer compound (B) can react with the formic acid in the polyacetal resin composition and detoxify the formic acid. Therefore, the polymer compound (B) can be called a formic acid scavenger.

Examples of the polymer compound (B) include, for example, (a) epoxidized fats and oils such as epoxidized soybean oil, epoxidized castor oil, and epoxidized linseed oil, (b) epoxidized fatty acid esters, (c) epoxy resins, and (d) liquid polymers having a glycidyl group. Examples of the epoxidized fatty acid esters encompass epoxidized fatty acid esters such as epoxidized fatty acid butyl, epoxidized fatty acid 2-ethylhexyl, epoxidized fatty acid octyl ester, and epoxidized fatty acid alkyl ester.

The epoxidized fats and oils and the epoxidized fatty acid esters are sometimes referred to as epoxy-based plasticizers. That is, in the present specification, epoxy-based plasticizers are also included in the polymer compound (B). Examples of the epoxy-based plasticizers, other than the epoxidized fats and oils and the epoxidized fatty acid esters, encompass diepoxystearyl epoxyhexahydrophthalate and epoxyhexahydro di(2-ethylhexyl)phthalate.

The polymer compound (B) is preferably an epoxidized fat or oil, more preferably is one or more selected from the group consisting of epoxidized soybean oil, epoxidized castor oil, epoxidized linseed oil, even more preferably is at least one selected from among epoxidized soybean oil and epoxidized castor oil, and particularly preferably is epoxidized soybean oil. This configuration has the advantage of achieving excellent economic efficiency, and the advantage that a high affinity is achieved between the rubber-containing graft copolymer (A) and the polymer compound (B), and thus it is easy to obtain coagulated material in which the polymer compound (B) exists near the rubber-containing graft copolymer (A) (for example, coagulated material in which the polymer compound (B) exists between a plurality of particles of the rubber-containing graft copolymer (A)).

The contained amount of the polymer compound (B) in the present modifier is not particularly limited. In the present modifier, the contained amount of the polymer compound (B) with respect to 100 parts by mass of the rubber-containing graft copolymer (A) is preferably not less than 0.1 parts by mass and not more than 5.0 parts by mass, more preferably not less than 0.1 parts by mass but less than 5.0 parts by mass, more preferably not less than 0.5 parts by mass and not more than 4.5 parts by mass, more preferably not less than 0.5 parts by mass and not more than 4.0 parts by mass, more preferably not less than 0.5 parts by mass but less than 4.0 parts by mass, even more preferably not less than 0.8 parts by mass and not more than 3.5 parts by mass, and particularly preferably not less than 1.0 parts by mass and not more than 3.0 parts by mass. This configuration has the advantage that the resultant modifier is able to provide a polyacetal resin composition which achieves lower VOC emissions.

### (2-3. Other optional components)

The present modifier may contain other optional components aside from the components described above, to the extent that effects in accordance with an embodiment of the present invention are not impaired. Examples of these other optional components encompass anti-blocking agents, antioxidants (described later) and other various component described later in the section "(4-4. Other additives)".

The other optional components can be added, as appropriate, during any step of a method for producing the present modifier. For example, the other optional components can be added to an aqueous suspension (aqueous latex) before or after coagulation of the rubber-containing graft copolymer (A). The other optional components can also be added to the modifier.

### (2-4. Contained amount of elemental chlorine)

Elemental chlorine existing in the present modifier can induce decomposition of polyacetal resin in a polyacetal resin composition obtained by mixing the modifier with polyacetal resin. Therefore, it is preferable for there to be as little elemental chlorine existing in the present modifier as possible. The contained amount of elemental chlorine in the present modifier, with respect to the mass of the modifier, is 1 ppm to 170 ppm, preferably 1 ppm to 160 ppm, even more preferably 1 ppm to 150 ppm, and particularly preferably 1 ppm to 140 ppm. With this configuration, the resultant modifier can provide a polyacetal resin composition that achieves lower VOC emissions. Note that, as described later, in a method for producing the modifier, in a case where a coagulant containing elemental chlorine is used, the resultant modifier could contain elemental chlorine. The contained amount of elemental chlorine in the modifier can be adjusted by changing, for example, (a) the used amount of coagulant containing elemental chlorine in the method for producing the modifier, and/or (b) conditions when washing coagulated material containing the rubber-containing graft copolymer (A) and the polymer compound (B), in the method for producing the modifier (for example, the temperature of washing water, the number of times of washing, and the amount of washing water).

### (2-5. Contained amount of elemental calcium)

Elemental calcium existing in the present modifier can induce decomposition of polyacetal resin in a polyacetal resin composition obtained by mixing the modifier with polyacetal resin. Therefore, it is preferable for there to be as little elemental calcium existing in the present modifier as possible. The contained amount of elemental calcium in the present modifier, with respect to the mass of the modifier, is 1 ppm to 780 ppm, preferably 1 ppm to 770 ppm, even more preferably 1 ppm to 760 ppm, and particularly preferably 1 ppm to 750 ppm. With this configuration, the resultant modifier can provide a polyacetal resin composition that achieves lower VOC emissions. Note that, as described later, in a method for producing the modifier, in a case where a coagulant containing elemental calcium is used, the resultant modifier could contain elemental calcium. The contained amount of elemental calcium in the modifier can be adjusted by changing, for example, (a) the used amount of coagulant containing elemental calcium in the method for producing the modifier, and/or (b) conditions when washing coagulated material containing the rubber-containing graft copolymer (A) and the polymer compound (B), in the method for producing the modifier (for example, the temperature of washing water, the number of times of washing, and the amount of washing water).

### (2-6. pH)

A mixture constituted by 10 parts by mass of the present modifier and 100 parts by mass of deionized water has a pH of 6.0 to 8.0. In other words, the present modifier is neutral or slightly alkaline. This configuration has the advantage that the resultant modifier is able to provide a polyacetal resin composition which achieves lower VOC emissions.

### (2-7. Contained amount of epoxy group)

The contained amount of an epoxy group in the present modifier is not particularly limited, but is preferably 15 µmol/g to 180 µmol/g, more preferably 20 µmol/g to 170 µmol/g, more preferably 25 µmol/g to 160 µmol/g, more preferably 30 µmol/g to 150 µmol/g, more preferably 30 µmol/g to 140 µmol/g, even more preferably 30 µmol/g to 130 µmol/g, and particularly preferably 35 µmol/g to 125 µmol/g. This configuration has the advantage that the resultant modifier is able to provide a polyacetal resin composition which achieves lower VOC emissions.

The contained amount (mol/g) of an epoxy group in the modifier means the ratio, with respect to the total mass (g) of the modifier, of the total amount (mol) of (i) the contained amount an epoxy group included in the rubber-containing graft copolymer (for example, in a case where a monomer including an epoxy group is used in production of a rubber-containing graft copolymer, the resultant rubber-containing graft copolymer includes an epoxy group), (ii) the contained amount of an epoxy group included in the polymer compound (B), and (iii) the contained amount of an epoxy group included in other components.

### [3. Method for producing polyacetal resin modifier]

A method for producing a polyacetal resin modifier in accordance with an embodiment of the present invention is a method for producing a polyacetal resin modifier, including: a polymer compound (B) addition step of adding a polymer compound (B), having a glycidyl group, and which is in an emulsified state, to an aqueous latex which contains a rubber-containing graft copolymer (A); a coagulation step of adding calcium chloride to the aqueous latex which is obtained from the polymer compound (B) addition step, thereby obtaining coagulated material which contains the rubber-containing graft copolymer (A) and the polymer compound (B); and a washing step of washing the coagulated material which is obtained in the coagulation step, said rubber-containing graft copolymer (A) having an elastic body and a graft part which is grafted to the elastic body, said graft part being constituted only by a structural unit which is derived from a vinyl-based monomer that does not have a reactive functional group, a mass ratio (parts by mass of the elastic body / parts by mass of the graft part) of the elastic body and the graft part being 60/40 to 95/5, the aqueous latex having a pH of 5 to 9.

The "method for producing a polyacetal resin modifier in accordance with an embodiment of the present invention" may hereinafter be referred to as "the present production method".

The present inventors, through the course of diligent research, made the original discovery that a production method having the following features (c1) and (c2) surprisingly makes it possible to provide a polyacetal resin modifier that can provide a polyacetal resin composition which achieves low VOC emissions.

The feature (c1) is adding the polymer compound (B) to an aqueous latex of the rubber-containing graft copolymer (A) prior to obtaining coagulated material of the rubber-containing graft copolymer (A).

The feature (c2) is adding the polymer compound (B) in an emulsified state to the aqueous latex of the rubber-containing graft copolymer (A).

The reason for which having the features (c1) and (c2) make it possible to provide the polyacetal resin modifier in accordance with an embodiment of the present invention is not certain, but it is conjectured that performing (c1) and (c2) in the present production method (particularly, in a polymer compound (B) addition step) makes it possible to obtain coagulated material in which the polymer compound (B) exists near the rubber-containing graft copolymer (A) (for example, coagulated material in which the polymer compound (B) exists between a plurality of particles of the rubber-containing graft copolymer (A). Therefore, in the modifier which is ultimately obtained, the polymer compound (B) exists near the rubber-containing graft copolymer (A). Furthermore, even in a polyacetal resin composition obtained by mixing (for example, kneading) the modifier and a polyacetal resin, the polymer compound (B) exists near the rubber-containing graft copolymer (A). As a result, the polyacetal resin composition achieves lower VOC emissions during and after molding of the polyacetal resin composition.
Note that the present invention is not limited in any way by the above conjecture.

Modifiers that contain a rubber-containing polymer but that do not contain the polymer compound (B) which has a glycidyl group have been known conventionally (hereinafter, such modifiers are also referred to as conventional modifiers). It is possible to obtain a polyacetal resin composition that contains a rubber-containing polymer and the polymer compound (B) which has a glycidyl group by mixing a conventional modifier, a polyacetal resin, and the polymer compound (B) which has a glycidyl group. However, the present inventors made the original finding that, with a polyacetal resin composition made via such a method using a conventional modifier, it is not possible to reduce VOC emissions during and after molding of the polyacetal resin composition. It is conjectured that this is because in a case where a polyacetal resin composition is obtained via the above method using a conventional modifier, the polymer compound (B) cannot be dispersed uniformly in the polyacetal resin, and, as a result, the polymer compound (B) does not exist near the rubber-containing graft copolymer (A).

In other words, by having the above configuration (particularly features (c1) and (c2)) the present production method has the advantage of making it possible to provide a modifier that can provide a polyacetal resin composition which achieves low VOC emissions. Specifically, the modifier obtained via the present production method can provide a polyacetal resin composition which achieves low VOC emissions during and after molding of the polyacetal resin composition. Furthermore, the modifier obtained via the present production method has the advantage of making it possible to provide a polyacetal resin composition which has excellent weather resistance and a polyacetal resin composition which can provide a molded product that has excellent weather resistance. Furthermore, the modifier obtained via the present production method has the advantage of making it possible to provide a polyacetal resin composition which can provide a molded product that has excellent impact resistance. Furthermore, the modifier obtained via the present production method has the advantage of making it possible to achieve, at a high level, both (a) high impact resistance of a molded product of the polyacetal resin composition and (b) prevention or reduction of VOC emissions during and after molding of the polyacetal resin composition. Furthermore, the modifier obtained via the present production method has the advantage of making it possible to provide a polyacetal resin composition which can provide a molded product that has excellent softness.

The following description will discuss various aspects of the present production method. Matters that are not discussed below (for example, various aspects of the rubber-containing graft copolymer (A) and the polymer compound (B)) are not particularly limited, and the matters discussed above in [2. Polyacetal resin modifier] may be applied as appropriate.

### (Rubber-containing graft copolymer (A) preparation step)

The present production method may include, prior to the polymer compound (B) addition step, a rubber-containing graft copolymer (A) preparation step of preparing an aqueous latex that includes the rubber-containing graft copolymer (A). Examples of specific aspects of the rubber-containing graft copolymer (A) preparation step include, for example, a method in which the rubber-containing graft copolymer (A) is produced by emulsion polymerization. A specific example of a method for producing the rubber-containing graft copolymer (A) by emulsion polymerization is the same as that already disclosed in "(Method for producing rubber-containing graft copolymer (A))". As such, those disclosures are cited here, and discussion thereof is omitted here. In a case where the rubber-containing graft copolymer (A) is produced by emulsion polymerization, an aqueous latex including the rubber-containing graft copolymer (A) can contain an emulsifier.

### (Polymer compound (B) addition step)

The polymer compound (B) addition step can also be said to be a step that includes an aqueous latex which contains the rubber-containing graft copolymer (A) and the polymer compound (B).

"Adding the polymer compound (B) in an emulsified state" can be said to be "adding an emulsion of the polymer compound (B)". Methods for obtaining an emulsion of the polymer compound (B) are not particularly limited. Examples thereof include (a) a method in which water, an emulsifier, and the polymer compound (B) are stirred to forcibly emulsify these components, and (b) a method in which a polymer compound (B) having an emulsifying ability is obtained by mixing the polymer compound (B) with a reactive emulsifier to thereby cause a reaction between the reactive emulsifier and a reactive group of the polymer compound (B), and then subsequently the polymer compound (B) is dispersed in water. From the viewpoint of industrial ease, the method for obtaining the emulsion of the polymer compound (B) is preferably (a) the method in which water, an emulsifier, and the polymer compound (B) are stirred.

### (Coagulation step)

The coagulation step is a step of using calcium chloride to obtain coagulated material which contains the rubber-containing graft copolymer (A) and the polymer compound (B).

In the coagulation step, the emulsifier and calcium chloride react in the aqueous latex, and a salt which is a reaction product thereof can be produced. Therefore, the calcium chloride can also be said to be a coagulant.

The present inventors made the original finding that, in a case where coagulated material is obtained using a coagulant such as calcium chloride, the resultant modifier is able to provide a polyacetal resin composition which achieves lower VOC emissions, as compared to a case where coagulated material is obtained by freeze drying without use of a coagulant.

Furthermore, the present inventors made the original finding that, in a case where coagulated material is obtained using a coagulant other than calcium chloride (for example, magnesium chloride) without using calcium chloride, it is difficult to prevent or reduce VOC emissions during and after molding of a polyacetal resin composition provided by the resultant modifier. The fact that the type of coagulant used when obtaining coagulated material of a rubber-containing graft copolymer affects VOC emissions during and after molding of an ultimately obtained polyacetal resin composition was completely unexpected conventionally and can be said to be surprising.

The used amount of the coagulant in the coagulation step is not particularly limited, but, for example, is preferably 0.1 parts by mass to 10.0 parts by mass, and particularly preferably 1.0 parts by mass to 8.0 parts by mass with respect to 100 parts by mass of the total amount of the rubber-containing graft copolymer (A) and the polymer compound (B) in the aqueous latex.

### (Washing step)

The washing step is a step of removing impurities from the coagulated material. Examples of the impurities include a salt that is a reaction product of the emulsifier and the coagulant and that is produced in the coagulation step.

Electric conductivity of the washing water is preferably as low as possible. The electric conductivity (mS/m) of the washing water is preferably 0.01 mS/m to 1.00 mS/m, more preferably 0.01 mS/m to 0.80 mS/m, even more preferably 0.01 mS/m to 0.50 mS/m, and particularly preferably 0.01 mS/m to 0.30 mS/m. This configuration has the advantage that the resultant modifier is able to provide a polyacetal resin composition which achieves lower VOC emissions.

Because the washing water has a low electric conductivity, pure water (having an electric conductivity of 0.01 mS/m to 1.00 mS/m) and deionized water (having an electric conductivity of 0.01 mS/m to 0.30 mS/m) are preferable.

The amount of the washing water is not particularly limited, but, for example, is preferably 500 parts by mass to 50,000 parts by mass, more preferably 500 parts by mass to 10,000 parts by mass, and particularly preferably 500 parts by mass to 5,000 parts by mass, with respect to 100 parts by mass of the coagulated material.

The method for washing the coagulated material in the washing step is not particularly limited. Examples of the method for washing the coagulated material include: a method involving mixing the coagulated material with water and stirring the mixture by a stirrer; a method involving kneading the coagulated material and water with use of a kneader; a method involving mixing the coagulated material with water with use of a planetary centrifugal mixer; a method involving spraying water onto the coagulated material; and a method involving carrying out cake washing with use of a press filter. Examples of the kneader include various types of kneaders such as batch type kneaders, continuous type kneaders, extrusion kneaders, and extruders.

The number of times of washing of the coagulated material in the washing step is not particularly limited, and may be one or more times. Length of washing time etc. for each time the washing is performed is not particularly limited.

In the washing step, a method of removing washing water used in washing is not particularly limited. Examples of the method include wiping away washing water used in washing, filtration under reduced pressure, oil-water separation, filter press, centrifugation, belt press, screw press, membrane separation, and press dehydration.

A method of removing water from the coagulated material is not particularly limited. Examples of the method include filtration under reduced pressure, oil-water separation, filter press, centrifugation, belt press, screw press, membrane separation, and press dehydration.

The present production method may further include a step of drying the coagulated material which includes the rubber-containing graft copolymer (A) and the polymer compound (B) and which is obtained via the washing step.

The specific manner in which the drying step is performed is not particularly limited, and examples thereof encompass a method involving drying the coagulated material with use of a dryer, a method involving introducing the coagulated material in a vessel and raising the temperature and reducing the pressure inside the vessel, a method involving introducing the coagulated material in a vessel and subjecting a dry gas and the coagulated material to countercurrent contact within the vessel, and the like. The temperature at which the drying is carried out in the drying step, e.g., the temperature inside the dryer or the temperature of the dry gas, is not particularly limited.

The coagulated material (or a dried product of the coagulated material) which contains the rubber-containing graft copolymer (A) and the polymer compound (B) and which is obtained in the present production method may be used as is as the polyacetal resin modifier. Alternatively, the coagulated material (or a dried product of the coagulated material) which contains the rubber-containing graft copolymer (A) and the polymer compound (B) and which is obtained in the present production method may be used as the polyacetal resin modifier after optionally adding and mixing an antioxidant described later and/or various components described in "(4-4. Other additives)" below.

The modifier obtained via the present production method may be a powdery and/or granular material. In other words, the present modifier may be a powdery and/or granular material. In the present specification, the term "powdery and/or granular material" refers to a material which can be a powdery material and/or a granular material and which is made up of powder particles, grains, and/or the like. In a case where a specific distinction is made between "granular material" and "powdery material", the "granular material" has a volume-average particle size of 0.1 mm to 10 mm, whereas the "powdery material" has a volume-average particle size of 0.01 mm to 0.1 mm. The "volume-average particle size" of less than 10 µm can be measured with use of a dynamic light scattering (DLS) particle size distribution analyzer Nanotrac Wave II-EX150 (manufactured by MICROTRACBEL CORP.), and the "volume-average particle size" equal to or more than 10 µm can be measured with use of a laser diffraction particle size distribution analyzer Microtrac MT3000 II (manufactured by MICROTRACBEL CORP.). The volume-average particle size of the modifier obtained via the present production method and the present modifier is not particularly limited, and may be, for example, 0.01 mm to 10 mm.

### [4. Polyacetal resin composition]

The polyacetal resin composition in accordance with an embodiment of the present invention contains the polyacetal resin modifier disclosed in [2. Polyacetal resin modifier] and the polyacetal resin (C).

In the present specification, the "polyacetal resin composition" may hereinafter be referred to as a "resin composition". The "polyacetal resin composition in accordance with an embodiment of the present invention" may hereinafter be referred to as "the present resin composition". A molded product of the polyacetal resin can be produced by molding the present resin composition (for example, by injection molding).

By having the above configuration, the present resin composition has the advantage that the VOC emissions are low. More specifically, by having the above configuration, the present resin composition has the advantage that VOC emissions during and after molding of the resin composition are low. Furthermore, by having the above configuration, the present resin composition has the advantage of having excellent weather resistance and making it possible to provide a molded product that has excellent weather resistance. Additionally, by having the above configuration, the present resin composition achieves an excellent balance between toughness of a resultant molded product, elasticity of the resultant molded product, and moldability of the resin composition. Furthermore, by having the above configuration, the present resin composition has the advantage of making it possible to provide a molded product having excellent impact resistance. Additionally, by having the above configuration, the present resin composition has the advantage of achieving, at a high level, both excellent high impact resistance of the molded product and prevention or reduction of VOC emissions during and after molding of the resin composition. Furthermore, by having the above configuration, the present resin composition has the advantage of making it possible to provide a molded product having excellent softness.

### (4-1. Polyacetal resin (C))

The polyacetal resin (C) is a polymer compound in which an oxymethylene group (-CH₂O-) is a main structural unit (for example a structural unit accounting for not less than 50 mol% out of 100 mol% of all structural units). The polyacetal resin (C) used in an embodiment of the present invention is not particularly limited. The polyacetal resin (C) may be (a) a single polymer that contains only a divalent oxymethylene group as a structural unit, or (b) may be a copolymer that contains, as structural units, a divalent oxymethylene group and a divalent oxyalkylene group having two or more carbon atoms.

The divalent oxyalkylene group preferably has 2 to 6 carbon atoms. Examples of an oxyalkylene group having 2 to 6 carbon atoms include an oxyethylene group, an oxypropylene group, and an oxybutylene group.

In a case where the polyacetal resin (C) is a copolymer, the ratio of the oxyalkylene group having 2 to 6 carbon atoms in the polyacetal resin (C) is not particularly limited. In the polyacetal resin (C), the amount, by mole, of the oxyalkylene group having 2 to 6 carbon atoms, with respect to 100 mol% of the total of the oxymethylene group and the oxyalkylene group having 2 to 6 carbon atoms, is preferably 0.4 mol% to 15.0 mol%, more preferably 0.4 mol% to 10.0 mol%, and particularly preferably 0.4 mol% to 5.0 mol%. With this configuration, there is the advantage that both excellent continuous productivity and excellent thermal stability can be achieved in the polyacetal resin (C).

A method for producing the polyacetal resin (C) is not particularly limited. Normally, trioxane is used as a main raw material for producing the polyacetal resin (C). Furthermore, a cyclic formal, a cyclic ether, and the like can be used to introduce an oxyalkylene group having 2 to 6 carbon atoms into the polyacetal resin (C). Specific examples of the cyclic formal include 1,3-dioxolane, 1,3-dioxane, 1,3-dioxepane, 1,3-dioxocane, 1,3,5-trioxepane, and 1,3,6-trioxocane. Specific examples of the cyclic ether include ethylene oxide, propylene oxide, and butylene oxide. In order to introduce an oxyethylene group into the polyacetal resin (C), 1,3-dioxolane can be used as a main raw material. In order to introduce an oxypropylene group into the polyacetal resin (C), 1,3-dioxane can be used as a main raw material. In order to introduce an oxybutylene group into the polyacetal resin (C), 1,3-dioxepane can be used as a main raw material. In the polyacetal resin (C), it is preferable that (i) the amount of hemiformal terminal groups, and (ii) the amount of formyl terminal groups, and also the amount of terminal groups which are unstable with respect to heat, acid, and bases are as low as possible. Note here that a hemiformal terminal group is represented as - OCH₂OH, and a formyl terminal group is represented as -CHO.

A melt index of the polyacetal resin (C) is not particularly limited, but is, for example, preferably 0.1 g/10 min. to 120.0 g/10 min., more preferably 0.5 g/10 min. to 70.0 g/10 min., even more preferably 0.5 g/10 min. to 30.0 g/10 min., and particularly preferably 0.5 g/10 min. to 20.0 g/10 min. In the present specification, the melt index of the polyacetal resin (C) is a value obtained by a measurement in conformance with ASTM-D1238, with the conditions of 190°C and 2.16 kg.

The content ratio of the polyacetal resin modifier in the polyacetal resin composition is not particularly limited. In the polyacetal resin composition, for example, in a case where the total of the polyacetal resin modifier and the polyacetal resin (C) is represented as 100% by mass, it is preferable that the polyacetal resin modifier is 3% by mass to 80% by mass and the polyacetal resin (C) is 20% by mass to 97% by mass, more preferable that the polyacetal resin modifier is 5% by mass to 50% by mass and the polyacetal resin (C) is 50% by mass to 95% by mass, even more preferable that the polyacetal resin modifier is 7% by mass to 30% by mass and the polyacetal resin (C) is 70% by mass to 93% by mass, and particularly preferable that the polyacetal resin modifier is 9% by mass to 25% by mass and the polyacetal resin (C) is 75% by mass to 91% by mass. With this configuration, there is the advantage that it is possible to achieve, at a high level, high weather resistance and high impact resistance of the molded product, and prevention or reduction of VOC emissions during and after molding of the resin composition.

In the polyacetal resin composition, the mass ratio (rubber-containing graft copolymer (A)/polyacetal resin (C)) between the rubber-containing graft copolymer (A) contained in the polyacetal resin modifier and the polyacetal resin (C) is preferably not less than 3/100, more preferably not less than 4/100, more preferably not less than 5/100, more preferably not less than 7/100, more preferably not less than 9/100, even more preferably not less than 10/100, and particularly preferably not less than 11/100. The upper limit of the mass ratio is, for example, preferably not more than 50/100, more preferably not more than 40/100, more preferably not more than 35/100, more preferably not more than 30/100, more preferably not more than 25/100, and particularly preferably not more than 20/100. In a case where the mass ratio is not less than 3/100, the resultant polyacetal resin composition is able to provide a molded product that has excellent impact resistance. In a case where the mass ratio is not more than 50/100, there is the advantage that extrusion of the resultant polyacetal resin composition becomes easy.

### (4-2. Formaldehyde scavenger)

The present resin composition preferably further contains a formaldehyde scavenger. In a case where the present resin composition contains a formaldehyde scavenger, the resin composition has the advantage that VOC emissions become lower. More specifically, in a case where the present resin composition contains a formaldehyde scavenger, there is the advantage that VOC emissions during and after molding of the resin composition are low.

The formaldehyde scavenger is not particularly limited. The formaldehyde scavenger is preferably a compound that includes a reactive group having reactivity with formaldehyde. Examples of the reactive group having reactivity with formaldehyde include an amide group, a hydrazide group, and a hydrazone group. Examples of a compound including such a reactive group include hydrazide compounds, hydrazone derivatives of hydrazine compounds, guanamine compounds, and urea compounds. The formaldehyde scavenger preferably contains one or more selected from the group consisting of a hydrazide compound, a hydrazone derivative of a hydrazine compound, a guanamine compound, and a urea compound, and more preferably is one or more selected from said group. With this configuration, there is the advantage that formaldehyde (VOC) emissions during and after molding of the resin composition are lower.

Examples of the hydrazide compound include aliphatic hydrazide compounds and aromatic hydrazide compounds. Examples of aliphatic dihydrazides include carbodihydrazide, oxalic acid dihydrazide, malonic acid dihydrazide, succinic acid dihydrazide, glutaric acid dihydrazide, adipic acid hydrazide, azelaic acid dihydrazide, sebacic acid dihydrazide, dodecanedioic dihydrazide (1,12-dodecanedicarbohydrazide), 1,18-octadecanedicarbohydrazide, stearic acid hydrazide, maleic acid dihydrazide, fumaric acid dihydrazide, and 7,11-octadecadiene-1,18-dicarbohydrazide.

Examples of aromatic dihydrazide compounds include isophthalic acid dihydrazide, terephthalic acid dihydrazide, 1,5-naphthalenedicarbohydrazide, 1,8-naphthalenedicarbohydrazide, 2,6-naphthalenedicarbohydrazide, 4,4'-oxybisbenzenesulfonylhydrazide, and 1,5-diphenylcarbonohydrazide.

Examples of hydrazone derivatives of a hydrazine compound include 1,12-bis[2-(1-methylethylidene)hydrazino]-1,12-dodecanedione, 1,12-bis(2-ethylidenehydrazino)-1,12-dodecanedione, 1,12-bis(2-propylidenehydrazino)-1,12-dodecanedione, 1,12-bis[2-(1-methylpropylidene)hydrazino]-1,12-dodecanedione, 1,12-bis[2-(1-ethylpropylidene)hydrazino]-1,12-dodecanedione, 1,10-bis[2-(1-methylethylidene)hydrazine]]-1,10-decanedione, 1,10-bis(2-propylidenehydrazino)-1,10-decanedione, 1,10-bis(2-propylidenehydrazino)-1,10-decanedione, 1,10-bis[2-(1-methylpropylidene)hydrazino]-1,10-decanedione, 1,10-bis[2-(1-ethylpropylidene)hydrazino]-1,10-decanedione, 1,6-bis[2-(1-methylethylidene)hydrazino]-1,6-hexanedione, 1,6-bis(2-ethylidenehydrazino)-1,6-hexanedione, 1,6-bis(2-propylidenehydrazino)-1,6-hexanedione, 1,6-bis[2-(1-methylpropylidene)hydrazino]-1,6-hexanedione, and 1,6-bis[2-(1-ethylpropylidene)hydrazino]-1,6-hexanedione.

Examples of the guanamine compound include benzoguanamine and N-methylolated benzoguanamine.

Examples of the urea compound include ethylene urea, dimethylethylene urea, propylene urea, and tetrabutyl urea.

The formaldehyde scavenger preferably contains one or more selected from the group consisting of adipic acid hydrazide, dodecanedioic dihydrazide, 1,12-bis[2-(1-methylethylidene)hydrazino]-1,12-dodecanedione, benzoguanamine, and ethylene urea, and more preferably is one or more selected from said group, because in such a case there will be lower VOC emissions during and after molding of the resultant resin composition.

The contained amount of the formaldehyde scavenger in the present resin composition is not particularly limited. The contained amount of the formaldehyde scavenger in the present resin composition is, for example, an amount such that a reactive group in the formaldehyde scavenger, with respect to 1 g of the total of the polyacetal resin modifier and the polyacetal resin (C), is preferably not less than 3.0 µmol, more preferably not less than 8.0 µmol, even more preferably not less than 10.0 µmol, and particularly preferably not less than 15.0 µmol. The contained amount of the formaldehyde scavenger in the present resin composition is, for example, an amount such that a reactive group in the formaldehyde scavenger, with respect to 1 g of the total of the polyacetal resin modifier and the polyacetal resin (C), is preferably not more than 100 µmol, more preferably not more than 80 µmol, and particularly preferably not more than 70 µmol. In a case where the contained amount of the formaldehyde scavenger is within the above ranges, there is the advantage that VOC emissions during and after molding of the resin composition will be lower, and that it is also possible to prevent or reduce dirtying of a mold caused by the formaldehyde scavenger.

### (4-3. Antioxidant)

The present resin composition may contain an antioxidant to the extent that effects in accordance with an embodiment of the present invention are not impaired. Examples of the antioxidant include hindered phenol-based antioxidants.

Examples of the hindered phenol-based antioxidant include 2,2'-methylene-bis(4-methyl-6-t-butylphenol), 4,4'-methylene-bis(2,6-di-t-butylphenol), 1,3,5-trimethyl-2,4,6-tris(3,5-di-t-butyl-4-hydroxybenzyl)benzene, 3,5-di-t-butyl-4-hydroxybenzyldimethylamine, distearyl-3,5-di-t-butyl-4-hydroxybenzylphosphonate, diethyl-3,5-di-t-butyl-4-hydroxybenzylphosphonate, 2,6,7-trioxa-1-phospha-bicyclo[2.2.2]oct-4-yl-methyl-3,5-di-t-butyl-4-hydroxyhydrocinnamate, 3,5-di-t-butyl-4-hydroxyphenyl-3,5-distearyl-thiotriazylamine, 2-(2-hydroxy-3,5-di-t-butylphenyl)-5-chlorobenzotriazole, 2,6-di-t-butyl-4-hydroxymethylphenol, 2,4-bis-(n-octylthio)-6-(4-hydroxy-3,5-di-t-butylanilino)-1,3,5-triazine, N,N'-hexamethylenebis(3,5-di-t-butyl-4-hydroxy-hydrocinnamamide), octadecyl-3-(3,5-di-t-butyl-4-hydroxyphenyl)propionate, 1,6-hexanediol-bis[3-(3,5-di-t-butyl-4-hydroxyphenyl)propionate], pentaerythritoltetrakis[3-(3,5-di-t-butyl-4-hydroxyphenyl)propionate], triethyleneglycol-bis[3-(3,5-dimethyl-4-hydroxyphenyl)propionate], triethyleneglycol-bis[3-(3-t-butyl-5-methyl-4-hydroxyphenyl)propionate], triethyleneglycol-bis[3-(3,5-di-t-butyl-4-hydroxyphenyl)propionate], and 2,2'-thiodiethyl-bis[3-(3,5-di-t-butyl-4-hydroxyphenyl)propionate].

The present resin composition may contain one of the above types of antioxidant alone, or may contain a combination of two or more types.

### (4-4. Other additives)

The present resin composition may optionally contain conventionally known additives and/or fillers, to the extent that achievement of objectives in accordance with an embodiment of the present invention is not impaired. Examples of additives and fillers that can be used in an embodiment of the present invention include thermoplastic resins other than polyacetal resins, photo stabilizers, ultraviolet absorbing agents, hindered amine light stabilizers (HALS), thermal stabilizers, antistatic agents, carbon fibers, glass fibers, glass flakes, potassium titanate whiskers, dyes, and pigments (for example, carbon black and titanium oxide). The disclosures in paragraphs [0113] to [0124] of Japanese Patent Application Publication Tokukai No. 2017-025257 can be referred to regarding details of the additives and fillers. The content of paragraphs [0113] to [0124] of Japanese Patent Application Publication Tokukai No. 2017-025257 is incorporated in the present specification by reference.

### (4-5. Method for producing polyacetal resin composition)

A method for producing the present resin composition is not particularly limited. For example, the present resin composition can be obtained by mixing the polyacetal resin modifier in accordance with an embodiment of the present invention, the polyacetal resin (C), and, as necessary, a formaldehyde scavenger, an antioxidant, and/or another additive, and then melt-kneading the resultant mixture.

The method for producing the polyacetal resin composition may be as follows:
A method for producing a polyacetal resin composition, including a step of mixing a polyacetal resin modifier which is obtained by the method for producing the polyacetal resin modifier disclosed in "[3. Method for producing polyacetal resin modifier]" above, and the polyacetal resin (C).

In the method for producing the present resin composition, a Henschel mixer, a tumbler mixer, or the like can be used for mixing the raw materials. A kneader such as a single-screw or twin-screw extruder, a Banbury mixer, a pressure kneader, a mixing roller, or the like can be used for melt-kneading of the resultant mixture. The melt-kneading of the mixture is preferably performed at not lower than the temperature at which the polyacetal resin melts, specifically, not lower than the melting point of the polyacetal resin (typically not lower than 180°C).

Particularly, in the polyacetal resin composition in accordance with an embodiment of the present invention, the following method can be preferably used in order to prevent or reduce secondary coagulation of the polyacetal resin modifier and to adjust an average secondary particle size to an appropriate value.

One example of a production method that is preferable for preventing or reducing secondary coagulation of the polyacetal resin modifier in the polyacetal resin composition is a method in which the polyacetal resin and the polyacetal resin modifier are mixed in a tumbler, a resultant mixture is subsequently extruded from an extruder into a strand shape, and then the mixture in the strand shape is cut into pellets. In this case, a twin-screw extruder is preferably used as the extruder, because doing so makes it possible to reduce occurrence of secondary coagulation as compared to a single-screw extruder. In particular, it is preferable that L/D, which is the ratio of the length L (mm) of a screw to the diameter D (mm) of the same screw, satisfies the relation 20<(L/D)<100, and more preferable that L/D satisfies the relation 25<(L/D)<70. Setting the ratio (L/D) to greater than 20 makes it easier for the polyacetal resin modifier to be finely dispersed in the polyacetal resin, and makes it possible to more effectively prevent or reduce the occurrence of secondary coagulation of the modifier. Furthermore, setting the ratio (L/D) to less than 100 makes it possible to effectively prevent or reduce the resin composition from being easily discolored by thermal degradation.

The shape of a die nozzle is not particularly limited, but in terms of pellet shape, a circular nozzle with a diameter of 1 mm to 10 mm is preferable, and a circular nozzle with a diameter of 2 mm to 7 mm is more preferable. The term circular as used here is not to be construed in a manner limited to circularity in the geometrical sense, and is intended to include shapes that would be construed as being substantially circular in the technical field of an embodiment of the present invention.

Furthermore, a melt temperature of the resin composition during melt-kneading is determined as appropriate by a relation to the melting point of the resin. In the present specification, the melt temperature is the temperature of a resin that comes out of a die hole (die nozzle) of an extruder, as measured with a thermocouple. The melt temperature is preferably not lower than 170°C, more preferably not lower than 180°C, and even more preferably not lower than 190°C. Furthermore, the melt temperature is preferably not higher than 250°C, and more preferably not higher than 230°C. Setting the melt temperature to be not lower than 170°C makes it more likely that melting will occur sufficiently and that production quantity will be markedly improved. Furthermore, setting the melt temperature to be not higher than 250°C makes it possible to more effectively prevent or reduce discoloration of the resin composition caused by thermal degradation.

Screw rotation speed during the melt-kneading is preferably 50 rpm to 500 rpm, and more preferably 70 rpm to 350 rpm. Setting the screw rotation speed to not less than 50 rpm makes it easier for the polyacetal resin modifier to be finely dispersed in the polyacetal resin, and makes it possible to more effectively prevent or reduce the occurrence of secondary coagulation of the modifier. Furthermore, setting the screw rotation speed to not more than 500 rpm makes it possible to markedly prevent or reduce heat generation during the melt-kneading, and makes it possible to effectively prevent or reduce discoloration of the resin composition caused by thermal degradation. Discharge quantity of the mixture from the die hole is preferably 5 kg/hr to 1,000 kg/hr and more preferably 7 kg/hr to 800 kg/hr. Setting the discharge quantity to not less than 5 kg/hr makes it easier for the polyacetal resin modifier to be finely dispersed, and makes it possible to effectively prevent or reduce the occurrence of secondary coagulation. Furthermore, setting the discharge quantity to not more than 1,000 kg/hr makes it possible to effectively prevent or reduce heat generation during the melt-kneading, and makes it possible to more effectively prevent or reduce discoloration of the resin composition caused by thermal degradation.

### [5. Applications]

The present modifier and the present resin composition can be suitably used in various applications including electrical and electronic applications, vehicle applications, and industrial equipment applications. The present modifier and the present resin composition can be suitably used in, for example: mechanical components of driving parts of audiovisual equipment; dishwashing machine handles; speaker grilles; propellers for washing machine tub agitation; switches and gears of office automation equipment; automotive wiper motor system gears, regulator handles, inner door handles, door lock side covers, shift levers, heater fans, pipe holders, power window regulators, seatbelt-related components, power seat gears, and sunroofs; clips, fasteners, and screws; and belt conveyors, chains, and torque limiters of conveyors of industrial equipment.

Embodiments of the present invention can be configured as below.
<1> A polyacetal resin modifier including: a rubber-containing graft copolymer (A); and a polymer compound (B) that has a glycidyl group, the rubber-containing graft copolymer (A) having an elastic body and a graft part which is grafted to the elastic body, the graft part being constituted only by a structural unit which is derived from a vinyl-based monomer that does not have a reactive functional group, a mass ratio (parts by mass of the elastic body / parts by mass of the graft part) of the elastic body and the graft part being 60/40 to 95/5, a contained amount of elemental chlorine in the polyacetal resin modifier being 1 ppm to 170 ppm with respect to mass of the polyacetal resin modifier, a contained amount of elemental calcium in the polyacetal resin modifier being 1 ppm to 780 ppm with respect to the mass of the polyacetal resin modifier, a mixture that is constituted by 10 parts by mass of the polyacetal resin modifier and 100 parts by mass of deionized water having a pH of 6.0 to 8.0.
<2> The polyacetal resin modifier as set forth in <1>, in which the polymer compound (B) is at least one selected from among epoxidized soybean oil and epoxidized castor oil.
<3> The polyacetal resin modifier as set forth in <1> or <2>, in which the elastic body is constituted only by a (meth)acrylate-based rubber.
<4> The polyacetal resin modifier as set forth in any one of <1> to <3>, in which a contained amount of an epoxy group in the polyacetal resin modifier is 15 pmol/g to 180 µmol/g.
<5> The polyacetal resin modifier as set forth in any one of <1> to <4>, in which a contained amount of the polymer compound (B) in the polyacetal resin modifier is not less than 0.1 parts by mass and not more than 5.0 parts by mass with respect to 100 parts by mass of the rubber-containing graft copolymer (A).
<6> The polyacetal resin modifier as set forth in any one of <1> to <5>, in which the polyacetal resin modifier is a powdery and/or granular material.
<7> A polyacetal resin composition including: a polyacetal resin modifier as set forth in any one of <1> to <6>; and a polyacetal resin (C).
<8> The polyacetal resin composition as set forth in <7>, in which, in a case where the total of the polyacetal resin modifier and the polyacetal resin (C) is represented as 100% by mass, the polyacetal resin modifier is 3% by mass to 80% by mass, and the polyacetal resin (C) is 20% by mass to 97% by mass.
<9> The polyacetal resin composition as set forth in <7> or <8>, further including a formaldehyde scavenger.
<10> The polyacetal resin composition as set forth in <9>, in which: the formaldehyde scavenger includes a reactive group that has reactivity with respect to formaldehyde; and a contained amount of the formaldehyde scavenger in the polyacetal resin composition is an amount such that the reactive group is not less than 3.0 µmol with respect to 1 g of the total of the polyacetal resin modifier and the polyacetal resin (C).
<11> The polyacetal resin composition as set forth in <9> or <10>, in which the formaldehyde scavenger is one or more selected from the group consisting of a hydrazide compound, a hydrazone derivative of a hydrazine compound, a guanamine compound, and a urea compound.
<12> A method for producing a polyacetal resin modifier, including: a polymer compound (B) addition step of adding a polymer compound (B), having a glycidyl group, and which is in an emulsified state, to an aqueous latex which contains a rubber-containing graft copolymer (A); a coagulation step of adding calcium chloride to the aqueous latex which is obtained from the polymer compound (B) addition step, thereby obtaining coagulated material which contains the rubber-containing graft copolymer (A) and the polymer compound (B); and a washing step of washing the coagulated material which is obtained in the coagulation step, said rubber-containing graft copolymer (A) having an elastic body and a graft part which is grafted to the elastic body, said graft part being constituted only by a structural unit which is derived from a vinyl-based monomer that does not have a reactive functional group, a mass ratio (parts by mass of the elastic body / parts by mass of the graft part) of the elastic body and the graft part being 60/40 to 95/5, the aqueous latex having a pH of 5 to 9.
<13> The method for producing the polyacetal resin modifier as set forth in <12>, in which the polymer compound (B) is at least one selected from among epoxidized soybean oil and epoxidized castor oil.
<14> The method for producing the polyacetal resin modifier as set forth in <12> or <13>, in which the elastic body is constituted only by a (meth)acrylate-based rubber.
<15> The method for producing the polyacetal resin modifier as set forth in any one of <12> to <14>, in which a contained amount of an epoxy group in the polyacetal resin modifier is 15 pmol/g to 180 µmol/g.
<16> The method for producing the polyacetal resin modifier as set forth in any one of <12> to <15>, in which a contained amount of the polymer compound (B) in the polyacetal resin modifier is not less than 0.1 parts by mass and not more than 5.0 parts by mass with respect to 100 parts by mass of the rubber-containing graft copolymer (A).
<17> The method for producing the polyacetal resin modifier as set forth in any one of <12> to <16>, in which the polyacetal resin modifier is a powdery and/or granular material.
<18> A method for producing a polyacetal resin composition including a step of mixing a polyacetal resin modifier which is obtained by a method for producing the polyacetal resin modifier as set forth in any one of <12> to <17>, and a polyacetal resin (C).
<19> The method for producing the polyacetal resin composition as set forth in <18>, in which, in a case where the total of the polyacetal resin modifier and the polyacetal resin (C) is represented as 100% by mass, the polyacetal resin modifier is 3% by mass to 80% by mass, and the polyacetal resin (C) is 20% by mass to 97% by mass.
<20> The method for producing the polyacetal resin composition as set forth in <18> or <19>, further including a formaldehyde scavenger.
<21> The method for producing the polyacetal resin composition as set forth in <20>, in which: the formaldehyde scavenger includes a reactive group that has reactivity with respect to formaldehyde; and a contained amount of the formaldehyde scavenger in the polyacetal resin composition is an amount such that the reactive group is not less than 3.0 µmol with respect to 1 g of the total of the polyacetal resin modifier and the polyacetal resin (C).
<22> The method for producing the polyacetal resin composition as set forth in <20> or <21>, in which the formaldehyde scavenger is one or more selected from the group consisting of a hydrazide compound, a hydrazone derivative of a hydrazine compound, a guanamine compound, and a urea compound.

### Examples

The following description will discuss an embodiment of the present invention in detail with reference to Examples and Comparative Examples. Note that the present invention is not limited to these examples. Embodiments of the present invention can be altered as appropriate within the scope of the gist disclosed herein. The present invention also includes, it its technical scope, embodiments achieved by altering the embodiments. Note that in the following Examples and Comparative Examples, "parts" means "parts by mass", and "%" means "% by mass".

### <Components>

Components used in the Production Examples, Examples, and Comparative Examples are as follows:
· Rubber-containing graft copolymer (A)
   A rubber-containing graft copolymer obtained in the Production Example described below was used.
· Polymer compound (B) having glycidyl group Epoxidized soybean oil (O-130P, manufactured by ADEKA CORPORATION)
· Coagulant
   Calcium chloride dihydrate (manufactured by FUJIFILM WAKO PURE CHEMICAL CORPORATION)
· Polyacetal resin (C)
   A polyacetal resin obtained in the Production Example described below was used.
· Formaldehyde scavenger
   (D-1): Ethylene urea (manufactured by KANTO CHEMICAL CO., INC.)
   (D-2): 1,12-bis[2-(1-methylethylidene)hydrazine]]-1,12-dodecanedione (manufactured by JAPAN FINECHEM CO., INC.)
   (D-3): Adipic acid dihydrazide (manufactured by JAPAN FINECHEM CO., INC.)
   (D-4): Dodecanedioic dihydrazide (manufactured by JAPAN FINECHEM CO., INC.)
   (D-5): Benzoguanamine (manufactured by NIHON KAGAKU SANGYO CO., LTD.)
· Antioxidant
   IRGANOX245 (manufactured by BASF)
   DLTP "Yoshitomi" (manufactured by API CORPORATION)
· Ultraviolet absorbing agent
   Tinuvin234(manufactured by BASF)
· HALS
   Tinvin622SF (manufactured by BASF)

### <Measurement methods>

The following description discusses measurement methods used in the Examples and the Comparative Examples.

### <Measurement method for volume-average particle size>

The volume-average particle size (Mv) of an elastic body or rubber-containing graft copolymer (A) dispersed in an aqueous latex was measured with use of Nanotrac Wave II-EX150 (manufactured by MICROTRACBEL CORP.). A test specimen used for measurement was prepared by diluting the aqueous latex in deionized water. When the measurement was made, the refractive index of water and the refractive index of the elastic body or the fine polymer particles (A) obtained in each of Production Examples were inputted, measurement time was set to 120 seconds, and the concentration of the test specimen was adjusted such that a load index fell within the range of 1 to 10.

### (Measurement method for electric conductivity in washing water).

Washing water was used as a sample, and ES-71 manufactured by HORIBA, LTD. was used to measure the electric conductivity of the washing water.

### (Measurement method for contained amounts of elemental chlorine and elemental calcium in modifier)

4.0 g of the modifier obtained in each Example and Comparative Example was weighed. The amount of elemental chlorine and elemental calcium in the modifier was measured with the energy dispersive X-ray fluorescence device "SPECTRO XEPOS" manufactured by RIGAKU INDUSTRIAL CORPORATION. The results thereof are represented as % by mass of each element with respect to 100% by mass of the modifier. Furthermore, results are not displayed for elements contained in an amount of less than 0.001%. Elements contained in the modifier in amounts of less than 0.001% (i.e., less than 10 ppm) can be said to have no effect on effects in accordance with an embodiment of the present invention.

### (Measurement method for pH of mixture of modifier and deionized water)

For each Example and Comparative Example, 10 parts by mass of the modifier obtained therein was mixed with 100 parts by mass of deionized water to obtain a mixture. The obtained mixture was stirred for 30 minutes. The pH of the obtained mixture (25°C) was measured using a pH meter.

### (Measurement method for contained amount of epoxy group in modifier)

For each Example and Comparative Example, the modifier obtained therein was added to deuterated chloroform containing 1,4-bis(trimethylsilyl)benzene-d4 (hereinafter referred to as BTMSB-d4) as an internal standard. A resultant mixed liquid was stirred so that the modifier was dispersed in the deuterated chloroform. A resultant dispersion was left still, and thereafter, a lower layer was collected, and the lower layer was filtered with a PTFE filter having a pore diameter of 0.2 µm to obtain a filtered liquid. The filtered liquid was used as a sample, and ¹H NMR was measured using AVANCE NEO 700 manufactured by BRUKER. The contained amount of an epoxy group in the modifier was found from the ratio of the peak surface area of a trimethylsilyl group (0.3 ppm) of BTMSB-d4, which is known to have a concentration of 0.71 mg/ml, and the peak surface area of a glycerol portion (4.3 ppm), which is characteristic of the epoxidized soybean oil that is the polymer compound (B). Note that, as described below, among materials used in the Examples and the Comparative Examples, the only compound containing an epoxy group was the polymer compound (B).

### (Method for producing ISO test piece)

For each Example and Comparative Example, pellets of the polyacetal resin composition obtained therein were subjected to injection molding using the injection molding machine EC-100 manufactured by TOSHIBA MACHINE CO., LTD., in conformance with the standard ISO 9988-2. Cylinder temperature was set to 195°C, and mold temperature was set to 90°C. As a result of the injection molding, a multipurpose test piece (ISO test piece) having a thickness of 4 mm was obtained. The obtained ISO test piece was used to measure notched Charpy impact value and flexural modulus. Note that the ISO test piece can be said to be a molded product of the polyacetal resin composition.

### (Evaluation method for weather resistance)

The ISO test piece obtained as above in "(Method for producing ISO test piece)" was subjected to a weather resistance test using S80 manufactured by SUGA TEST INSTRUMENTS CO., LTD., with a test environment as follows: sunshine carbon arc lamp (light source), 83°C (black panel temperature), no rain, #255 (light filter), 50% OH (humidity), and 255 W/m² (300 nm to 700 nm) (irradiance). The time to crack occurrence upon testing was evaluated. Note that, in practical terms, if the time to crack occurrence of the ISO test piece of the polyacetal resin composition is not less than 150 hours, the polyacetal resin composition can be determined to have excellent weather resistance and to be able to provide a molded product having excellent weather resistance.

Furthermore, in applications which require weather resistance, typically an ultraviolet absorbing agent and/or a hindered amine light stabilizer (HALS) is added to the polyacetal resin. In the Examples as well, an ISO test piece for evaluating weather resistance was produced using a polyacetal resin composition to which an ultraviolet absorbing agent and a hindered amine light stabilizer had been added.

### (Measurement method for impact resistance)

From the ISO test piece, a test piece with a length of 80 mm, a width of 10 mm, and a thickness of 4 mm was cut, and a notching process with a tip radius r=0.25 mm was performed on that test piece, using a notching tool manufactured by TOYO SEIKI CO., LTD. Thereafter, the resultant test piece was subjected to a Charpy impact test in conformance with ISO 179-1 at room temperature (23°C), and a notched Charpy impact value was obtained. Note that, in practical terms, if the notched Charpy impact value of the test piece of the polyacetal resin composition is not less than 10 kj/m², the polyacetal resin composition can be determined to be able to provide a molded product that has excellent impact resistance. From the viewpoint of comparison, in a case where the ratio of the notched Charpy impact value of the test piece of the polyacetal resin composition including the modifier to a notched Charpy impact value measured for a test piece of only the polyacetal resin (i.e., Reference Example 1) included in the polyacetal resin composition (in other words, the following ratio: notched Charpy impact value of test piece of polyacetal resin composition including modifier / notched Charpy impact value of test piece of only polyacetal resin (i.e., Reference Example 1)) is not less than 1.1, the polyacetal resin composition can be determined to be able to provide a molded product having excellent impact resistance.

### (Measurement method for flexural modulus)

An ISO test piece was used as a sample, and a bending test was performed using a fully automatic bending tester as a bending tester, in accordance with the method described in ISO 178 and at a bending test speed of 2 mm/min, to measure the flexural modulus. Note that, in practical terms, if the flexural modulus of the ISO test piece of the polyacetal resin composition is not more than 2,300 MPa, the polyacetal resin composition can be determined to be able to provide a molded product that has excellent softness. From the viewpoint of comparison, in a case where the ratio of the flexural modulus of the ISO test piece of the polyacetal resin composition including the modifier to a flexural modulus measured for an ISO test piece of only the polyacetal resin (i.e., Reference Example 1) included in the polyacetal resin composition (in other words, the following ratio: flexural modulus of ISO test piece of polyacetal resin composition including modifier / flexural modulus of ISO test piece of only polyacetal resin (i.e., Reference Example 1)) is not more than 0.9, the polyacetal resin composition can be determined to be able to provide a molded product having excellent softness.

### (Method for preparing flat plate test piece)

For each Example and Comparative Example, pellets of the polyacetal resin composition obtained therein were subjected to 4 hours of heat treatment in a hot air circulation dryer at a temperature of 80°C. Next, an injection molding machine SE-30 manufactured by SUMITOMO HEAVY INDUSTRIES, LTD. was used for injection molding of the pellets after heat treatment, at a cylinder temperature of 215°C and a mold temperature of 80°C, to prepare a flat plate test piece measuring 100 mm × 40 mm × 2 mm. Note that the flat plate test piece can be said to be a molded product of the polyacetal resin composition.

### (Measurement method for formaldehyde emissions)

The day after the above flat plate test piece was prepared, the flat plate test piece was used to measure formaldehyde emissions (referred to as pg/g-POM; formaldehyde emissions (µg) per 1 g of polyacetal resin) in conformance with the method disclosed in the standard VDA275 (Automotive interior components - Determination of formaldehyde emissions with modified flask method) of the German Association of the Automotive Industry. The specific measurement method is as follows.
(1) 50 mL of distilled water was introduced into polyethylene container. The flat plate test piece was placed into the polyethylene container in a state of being suspended in air, and a lid of the polyethylene container was closed. Thereafter, the polyethylene container was heated for 3 hours at 60°C in a sealed state.
(2) Next, the polyethylene container was left at room temperature for 60 minutes, and thereafter the flat plate test piece was removed from the polyethylene container.
(3) The amount of formaldehyde absorbed in the distilled water in the polyethylene container was measured via an acetylacetone colorimetric method using a UV spectrometer, and using the distilled water as a sample. A value obtained by dividing the amount of formaldehyde by the mass of the polyacetal resin (C) in the flat plate test piece was considered to be the formaldehyde emissions of the flat plate test piece.

Note that, in practical terms, if the formaldehyde emissions of the flat plate test piece of the polyacetal resin composition are not more than 20.0 µg/g-POM, the polyacetal resin composition can be determined to achieve low VOC emissions during and after molding. Furthermore, from the viewpoint of comparison, if the ratio of the formaldehyde emissions of the flat plate test piece of the polyacetal resin composition containing the modifier to formaldehyde emissions measured for a flat plate test piece of only the polyacetal resin (i.e., Reference Example 1) contained in the polyacetal resin composition (that is, the following ratio: formaldehyde emissions of flat plate test piece of polyacetal resin composition containing modifier / formaldehyde emissions of flat plate test piece of only polyacetal resin (i.e., Reference Example 1)) is not more than 2.0, the polyacetal resin composition can be determined to achieve low formaldehyde emissions (VOC emissions) during and after molding.

In fields in which there are stricter restrictions on formaldehyde emissions, such as in automotive interior applications, using a formaldehyde scavenger makes it possible to further suppress formaldehyde emissions. In a case where the polyacetal resin composition contains a formaldehyde scavenger (for example, in a case where the formaldehyde scavenger is contained in an amount such that, with respect to 1 g of the total of the polyacetal resin modifier and the polyacetal resin (C), a reactive group is not less than 8.9 µmol), if the formaldehyde emissions of the flat plate test piece of the polyacetal resin composition are not more than 2.5 pg/g-POM, the polyacetal resin composition can be determined to achieve low VOC emissions during and after molding. Furthermore, from the viewpoint of comparison, if the ratio of the formaldehyde emissions of the flat plate test piece of the polyacetal resin composition containing the modifier to formaldehyde emissions measured for a flat plate test piece of only the polyacetal resin (i.e., Reference Example 2) contained in the polyacetal resin composition (that is, the following ratio: formaldehyde emissions of flat plate test piece of polyacetal resin composition containing modifier / formaldehyde emissions of flat plate test piece of only polyacetal resin (i.e., Reference Example 2)) is not more than 2.5, the polyacetal resin composition can be determined to achieve low formaldehyde emissions (VOC emissions) during and after molding.

Next, the following description will discuss each production method, each Example, and each Comparative Example.

### <Preparation of rubber-containing graft copolymer (A)>

### [Production Example 1] Synthesis of aqueous latex containing rubber-containing graft copolymer (A)

Into a pressure-resistant polymerization apparatus equipped with a stirrer, while blowing nitrogen therein, 100 parts of pure water and 0.014 parts of polyoxyethylene alkyl ether sodium phosphate as a surfactant were introduced. Next, while stirring the raw materials thusly introduced, gas inside the pressure-resistant polymerization apparatus was replaced with nitrogen so that oxygen was sufficiently removed from the inside of the pressure-resistant polymerization apparatus. Thereafter, the temperature of the solution inside the pressure-resistant container was raised to 50°C. Thereafter, 8.5 parts of butylacrylate (BA), 0.04 parts of allyl methacrylate, and 0.002 parts of t-butylhydroperoxide (BHP) were added into the pressure-resistant container in one addition. Thereafter, 0.002 parts of ethylenediaminetetraacetic acid (EDTA) disodium salt, 0.0012 parts of ferrous sulfate, and 0.05 parts of sodium formaldehyde sulfoxylate (SFS) were added into the pressure-resistant container. Thereafter, polymerization was performed over 1 hour. Thereafter, a mixture of 0.68 parts of polyoxyethylene alkyl ether sodium phosphate, which is a surfactant, 64.5 parts of BA, 0.32 parts of allyl methacrylate, and 0.02 parts of BHP was added into the pressure-resistant container over a period of 210 minutes. Thereafter, the reaction solution inside the pressure-resistant polymerization apparatus was held at 50°C for 45 minutes to perform polymerization, and an aqueous latex containing an elastic body was obtained. Next, 73 parts of solid content of the elastic body (50°C) and 150 parts of pure water (50°C) were introduced into a glass reactor. The glass reactor had a thermometer, a stirrer, a reflux condenser, a nitrogen inlet, and a monomer adding device. While gas in the glass reactor was replaced with nitrogen, the raw materials thus introduced were stirred at 50°C. Next, a mixture of 25.3 parts of methyl methacrylate (MMA) and 1.7 parts of BA was added as a monomer component into the glass reactor over a period of 1 hour. Concurrently with the addition of the monomer component (i.e., MMA and BA), addition of 0.0125 parts of BHP into the glass reactor was commenced. After completion of the addition of the BHP, the temperature of the reaction solution in the glass reactor was kept at 50°C for 1 hour to perform polymerization, and an aqueous latex including the rubber-containing graft copolymer (A) was obtained. The volume-average particle size of the rubber-containing graft copolymer (A) contained in the aqueous latex thus obtained was 200 nm.

### <Preparation of emulsion of polymer compound (B)>

4.5 parts by mass of pure water, 0.45 parts by mass of polyoxyethylene alkyl ether sodium phosphate as an emulsifier, 1 part by mass of epoxidized soybean oil as the polymer compound (B), 0.125 parts by mass of IRGANOX245, and 0.375 parts by mass of DLTP "Yoshitomi" were stirred for 10 minutes at 10000 rpm using a homomixer HM-310 (manufactured by AS ONE CORPORATION). Obtained via this operation was an emulsion of the epoxidized soybean oil, which is the polymer compound (B) having a glycidyl group.

### <Preparation of polyacetal resin modifier>

### (Example 1)

6.45 parts by mass of the emulsion of the polymer compound (B), which corresponds to 1 part by mass of epoxidized soybean oil that is the polymer compound (B), was added to the aqueous latex containing 100 parts by mass of solid content of the rubber-containing graft copolymer (A) Thereafter, an aqueous solution of calcium chloride was added to the resultant aqueous latex, and flocculation was performed, to obtain a slurry containing coagulated material which included the rubber-containing graft copolymer (A) and the polymer compound (B). The used amount of calcium chloride was 3.5 parts by mass with respect to 100 parts by mass of the total amount of the rubber-containing graft copolymer (A) and the polymer compound (B). Next, water was removed from the slurry thus obtained, and the coagulated material was collected. Thereafter, the coagulated material was washed with 1000 parts by mass of washing water with respect to 100 parts by mass of solid content of the coagulated material, and then water was removed from the coagulated material. Thereafter, the resultant coagulated material was dried, and a polyacetal resin modifier (M-1) containing the rubber-containing graft copolymer (A) and the polymer compound (B) was obtained. The contained amounts of elemental chlorine and elemental calcium and the pH of the modifier thus obtained were measured. The results thereof are shown in Table 1.

### (Examples 2 to 4 and Comparative Examples 1 and 2)

In Examples 2 to 4 and Comparative Examples 1 and 2, a polyacetal resin modifier was prepared via operations that were the same as Example 1, except that the used amount of the emulsion of the polymer compound (B) that has a glycidyl group (i.e., the used amount of the epoxidized soybean oil which is the polymer compound (B)) and the used amount of the washing water were changed as indicated in Table 1. In other words, in Comparative Example 1, the polymer compound (B) having a glycidyl group was not used, and in Comparative Example 2, the obtained coagulated material was not washed. The modifiers obtained in Examples 2 to 4 and in Comparative Examples 1 and 2 are respectively referred to as modifiers (M-2) to (M-6). The contained amounts of elemental chlorine and elemental calcium and the pH of each modifier obtained were measured. The results thereof are shown in Table 1.

### (Comparative Example 3)

An aqueous latex containing 100 parts by mass of solid content of the rubber-containing graft copolymer (A) was placed in a container, and water content in the container was evaporated by a vacuum pump equipped with a cold trap. Thus, a slurry containing coagulated material that includes the rubber-containing graft copolymer (A) was obtained. Thereafter, the coagulated material was washed with use of 2500 parts of pure water as washing water, with respect to 100 parts of solid content of the coagulated material, and then water was removed from the coagulated material. Thereafter, the resultant coagulated material was dried, and a polyacetal resin modifier (M-7) containing the rubber-containing graft copolymer (A) was obtained. The contained amounts of elemental chlorine and elemental calcium and the pH of the modifier thus obtained were measured. The results thereof are shown in Table 1. Note that "N.D." is an abbreviation for "Not Detected" and indicates that an element could not be detected (was undetectable).

### (Comparative Example 4)

19.35 parts by mass of an emulsion of the polymer compound (B), which corresponds to 3 parts by mass of epoxidized soybean oil that is the polymer compound (B), was added to the aqueous latex containing 100 parts by mass of solid content of the rubber-containing graft copolymer (A) Thereafter, 3.5 parts by mass of an aqueous solution of magnesium chloride was added as a coagulant to the resultant aqueous latex, and flocculation was performed, to obtain a slurry containing coagulated material which included the rubber-containing graft copolymer (A) and the polymer compound (B). Next, water was removed from the slurry thus obtained, and the coagulated material was collected. Thereafter, the coagulated material was washed with 2500 parts by mass of washing water with respect to 100 parts by mass of solid content of the coagulated material, and then water was removed from the coagulated material. Thereafter, the resultant coagulated material was dried, and a polyacetal resin modifier (M-8) containing the rubber-containing graft copolymer (A) and the polymer compound (B) was obtained. The contained amounts of elemental chlorine and elemental calcium and the pH of the modifier thus obtained were measured. The results thereof are shown in Table 1. Note that "N.D." is an abbreviation for "Not Detected" and indicates that an element could not be detected (was undetectable).

### (Comparative Example 13)

### <Preparation of polyacetal resin modifier (M-9) containing rubber-containing graft copolymer that includes structural unit which is derived from vinyl-based monomer having reactive functional group>

### <Synthesis of rubber-containing graft copolymer that includes structural unit which is derived from vinyl-based monomer having reactive functional group>

Into a pressure-resistant polymerization apparatus equipped with a stirrer, while blowing nitrogen therein, 100 parts of pure water and 0.014 parts of polyoxyethylene alkyl ether sodium phosphate as a surfactant were introduced. Next, while stirring the raw materials thusly introduced, gas inside the pressure-resistant polymerization apparatus was replaced with nitrogen so that oxygen was sufficiently removed from the inside of the pressure-resistant polymerization apparatus. Thereafter, the temperature of the solution inside the pressure-resistant container was raised to 50°C. Thereafter, 8.5 parts of butylacrylate (BA), 0.04 parts of allyl methacrylate, and 0.002 parts of t-butylhydroperoxide (BHP) were added into the pressure-resistant container in one addition. Thereafter, 0.002 parts of ethylenediaminetetraacetic acid (EDTA) disodium salt, 0.0012 parts of ferrous sulfate, and 0.05 parts of sodium formaldehyde sulfoxylate (SFS) were added into the pressure-resistant container. Thereafter, polymerization was performed over 1 hour. Thereafter, a mixture of 0.68 parts of polyoxyethylene alkyl ether sodium phosphate, which is a surfactant, 64.5 parts of BA, 0.32 parts of allyl methacrylate, and 0.02 parts of BHP was added into the pressure-resistant container over a period of 210 minutes. Thereafter, the reaction solution inside the pressure-resistant polymerization apparatus was held at 50°C for 45 minutes to perform polymerization, and an aqueous latex containing an elastic body was obtained. Next, 73 parts of solid content of the elastic body (50°C) and 150 parts of pure water (50°C) were introduced into a glass reactor. The glass reactor had a thermometer, a stirrer, a reflux condenser, a nitrogen inlet, and a monomer adding device. While gas in the glass reactor was replaced with nitrogen, the raw materials thus introduced were stirred at 50°C. Next, a mixture of 20.3 parts of methyl methacrylate (MMA), 5 parts of glycidyl methacrylate (GMA), and 1.7 parts of BA was added as a monomer component into the reactor over a period of 1 hour. Concurrently with the addition of the monomer component (i.e., MMA, GMA, and BA), addition of 0.0125 parts of BHP into the glass reactor was commenced. After completion of the addition of the BHP, the temperature of the reaction solution in the glass reactor was kept at 50°C for 1 hour to perform polymerization, and an aqueous latex containing a rubber-containing graft copolymer that includes a structural unit which is derived from a vinyl-based monomer having a reactive functional group was obtained. The volume-average particle size of the rubber-containing graft copolymer that includes a structural unit which is derived from a vinyl-based monomer having a reactive functional group in the aqueous latex thus obtained was 200 nm.

Thereafter, an aqueous solution of calcium chloride was added to the resultant aqueous latex, and flocculation was performed, to obtain a slurry containing coagulated material of the rubber-containing graft copolymer that includes a structural unit derived from a vinyl-based monomer having a reactive functional group. The used amount of calcium chloride was 3.5 parts by mass with respect to 100 parts by mass of the rubber-containing graft copolymer. Next, water was removed from the slurry thus obtained, and the coagulated material was collected. Thereafter, the coagulated material was washed with 1000 parts by mass of washing water with respect to 100 parts by mass of solid content of the coagulated material, and then water was removed from the coagulated material. Thereafter, the resultant coagulated material was dried to obtain a polyacetal resin modifier (M-9) containing the rubber-containing graft copolymer that includes a structural unit derived from a vinyl-based monomer having a reactive functional group. The contained amounts of elemental chlorine and elemental calcium and the pH of the modifier thus obtained were measured. The results thereof are shown in Table 1.

In all of the Examples and in Comparative Examples 1, 2, 4, and 13, pure water having an electric conductivity of 0.1 mS/m was used as the washing water.

### [Table 1]

**(Table 1)**

| | Modifier | Polymer compound (B) Epoxidized soybean oil (Parts by weight) | Amount of washing water per 100 parts by mass of solid content (×10² parts by mass) | Contained amount of elements (ppm) | | Mixture of modifier and pure water (pH) | Contained amount of epoxy group in modifier (µmol/g) |
|---|---|---|---|---|---|---|---|
| | | | | Elemental chlorine | Elemental calcium | | |
| Ex. 1 | M-1 | 1 | 10 | 85 | 727 | 6.92 | 37 |
| Ex. 2 | M-2 | 1 | 25 | 42 | 633 | 6.72 | 36 |
| Ex. 3 | M-3 | 3 | 25 | 32 | 551 | 6.71 | 120 |
| Ex. 4 | M-4 | 1 | 5 | 128 | 746 | 6.74 | 38 |
| Comp. Ex. 1 | M-5 | 0 | 25 | 81 | 530 | 6.70 | 0 |
| Comp. Ex. 2 | M-6 | 1 | 0 | 179 | 787 | 6.54 | 40 |
| Comp. Ex. 3 | M-7 | 0 | 25 | N.D. | N.D. | 7.13 | 0 |
| Comp. Ex. 4 | M-8 | 3 | 25 | N.D. | N.D. | 7.52 | 118 |
| Comp. Ex. 13 | M-9 | 0 | 10 | - | - | - | - |

Note that in Tables 1 through 6, "Ex." is an abbreviation for "Example", "Comp. Ex." is an abbreviation for "Comparative Example", and "Ref. Ex." is an abbreviation for "Reference Example".

### <Preparation of polyacetal resin>

### [Production Example 2] Synthesis of polyacetal resin (C)

Trioxane and 1,3-dioxolane were copolymerized such that, in 100% by mass of the polyacetal resin to be obtained, the contained amount of a structural unit derived from 1,3-dioxolane was 3.8% by mass (4.6 mol%). To the resultant copolymer, 0.3 parts by mass of IRGANOX245 and 0.05 parts by mass of melamine were added. The resultant mixture was subjected to a melt-knead process at 222°C for 20 minutes, and a resin resulting therefrom was used as the polyacetal resin (C). The polyacetal resin (C) thus obtained had a melt index (ASTM-D1238 standard; 190°C, 2.16 kg) of 10.5 g/10 min.

### (Examples 5 to 11, Comparative Examples 5 to 8 and 14, and Reference Example 1)

### (Production of polyacetal resin composition)

Each of the polyacetal resin composition modifiers (M1 to M9) were dry-blended with the polyacetal resin (C) at the blending ratios indicated in Tables 2 and 3. Next, the resultant mixture was subjected to melting and shear mixing using a vent-equipped twin-screw extruder (PCM-30, manufactured by IKEGAI CORP.) having a screw diameter (D) of 30 mm, a screw length (L) of 760 mm, and a die nozzle diameter of 3.5 mm, at a cylinder temperature (melt temperature) of 200°C, a screw rotation speed of 120 rpm, and a discharge quantity of 10 kg/hour, to produce pellets of a polyacetal resin composition.

Thereafter, the pellets (polyacetal resin composition) thus obtained were dried for 5 hours at 90°C. Thereafter, an injection molding machine EC-100 manufactured by TOSHIBA MACHINE CO., LTD. was used to perform injection molding of the pellets of the polyacetal resin composition after drying, at a cylinder temperature of 195°C and a mold temperature 90°C, to prepare an ISO test piece. The ISO test piece thus obtained was used to measure impact resistance and flexural modulus. Furthermore, the pellets (polyacetal resin composition) that were obtained were used to prepare a flat plate test piece via the method described above, and the flat plate test piece was used to measure formaldehyde emissions. Results of these measurements are indicated in Tables 2 and 3.

Note that, in Comparative Example 14 which used the polyacetal resin composition modifier (M-9), the pellets of the polyacetal resin composition that was obtained were found to have a large number of protrusions on the surfaces thereof, and therefore an ISO test piece and a flat plate test piece were not prepared, and evaluation thereof was not performed. This is indicated as "No test piece prepared" in Table 2.

### (Examples 12 to 24, Comparative Examples 9 to 12, and Reference Example 2)

### (Production of polyacetal resin composition)

Each of polyacetal resin composition modifiers (M1 to M8) were dry-blended with the polyacetal resin (C) and a formaldehyde scavenger at the blending ratios indicated in Tables 4 and 5. For these Examples and Comparative Examples, the various substances indicated in Tables 4 and 5 were used as the formaldehyde scavenger. Next, the resultant mixture was subjected to melting and shear mixing using a vent-equipped twin-screw extruder (PCM-30, manufactured by IKEGAI CORP.) having a screw diameter (D) of 30 mm, a screw length (L) of 760 mm, and a die nozzle diameter of 3.5 mm, at a cylinder temperature (melt temperature) of 200°C, a screw rotation speed of 120 rpm, and a discharge quantity of 10 kg/hour, to produce pellets of a polyacetal resin composition.

Thereafter, the pellets (polyacetal resin composition) thus obtained were dried for 5 hours at 90°C. Thereafter, an injection molding machine EC-100 manufactured by TOSHIBA MACHINE CO., LTD. was used to perform injection molding of the pellets of the polyacetal resin composition after drying, at a cylinder temperature of 195°C and a mold temperature 90°C, to prepare an ISO test piece. The ISO test piece thus obtained was used to measure impact resistance and flexural modulus. Furthermore, the pellets (polyacetal resin composition) that were obtained were used to prepare a flat plate test piece via the method described above, and the flat plate test piece was used to measure formaldehyde emissions. Results of these measurements are indicated in Tables 4 and 5.

### (Examples 25 to 30 and Comparative Example 15)

### (Production of polyacetal resin composition)

Each of the polyacetal resin composition modifiers (M1 to M4 and M10) were dry-blended with the polyacetal resin (C), 0.4 parts by weight of Tinuvin234, and 0.3 parts by weight of Tinuvin622. Next, the resultant mixture was subjected to melting and shear mixing using a vent-equipped twin-screw extruder (PCM-30, manufactured by IKEGAI CORP.) having a screw diameter (D) of 30 mm, a screw length (L) of 760 mm, and a die nozzle diameter of 3.5 mm, at a cylinder temperature (melt temperature) of 200°C, a screw rotation speed of 120 rpm, and a discharge quantity of 10 kg/hour, to produce pellets of a polyacetal resin composition. Note that, in Comparative Example 15, used as the modifier M-10 was KaneAce M-910, which is a butadiene-based rubber-containing graft copolymer manufactured by KANEKA CORPORATION.

Thereafter, the pellets (polyacetal resin composition) thus obtained were dried for 5 hours at 90°C. Thereafter, an injection molding machine EC-100 manufactured by TOSHIBA MACHINE CO., LTD. was used to perform injection molding of the pellets of the polyacetal resin composition after drying, at a cylinder temperature of 195°C and a mold temperature 90°C, to prepare an ISO test piece. The ISO test piece thus obtained was used to measure impact resistance, flexural modulus, and weather resistance. Furthermore, the pellets (polyacetal resin composition) that were obtained were used to prepare a flat plate test piece via the method described above, and the flat plate test piece was used to measure formaldehyde emissions. Results of these measurements are indicated in Table 6.

### [Table 2]

**(Table 2)**

| | | | | Ex. 5 | Ex. 6 | Ex. 7 | Ex. 8 | Comp. Ex. 5 | Comp. Ex. 6 | Comp. Ex. 7 | Comp. Ex. 8 | Ref. Ex. 1 | Comp. Ex. 14 |
|---|---|---|---|---|---|---|---|---|---|---|---|---|---|
| Composition | Polyacetal resin (C) | Added amount | Parts by weight | 90 | 90 | 90 | 90 | 90 | 90 | 90 | 90 | 100 | 90 |
| | Modifier | Type | - | M-1 | M-2 | M-3 | M-4 | M-5 | M-6 | M-7 | M-8 | - | M-9 |
| | | Added amount | Parts by weight | 10 | 10 | 10 | 10 | 10 | 10 | 10 | 10 | 0 | 10 |
| Properties | Formaldehyde emissions | µg/g-POM | | 12.1 | 12.4 | 11.9 | 13.1 | 22.1 | 28.3 | 100 | 25.1 | 10.0 | No test piece prepared |
| | Notched Charpy impact value | kj/m² | | 13 | 13 | 13 | 13 | 13 | 13 | 13 | 13 | 7 | |
| | Flexural modulus | MPa | | 2000 | 2000 | 2000 | 2000 | 2000 | 2000 | 2000 | 2000 | 2800 | |

### [Table 3]

**(Table 3)**

| | | | | Ex. 5 | Ex. 9 | Ex. 10 | Ex. 11 |
|---|---|---|---|---|---|---|---|
| Composition | Polyacetal resin (C) | Added amount | Parts by weight | 90 | 90 | 85 | 70 |
| | Modifier | Type | - | M-1 | M-1 | M-1 | M-2 |
| | | Added amount | Parts by weight | 10 | 5 | 15 | 30 |
| Properties | Formaldehyde emissions | µg/g-POM | | 12.1 | 11.5 | 14.2 | 18.2 |
| | Notched Charpy impact value | kj/m² | | 13 | 12 | 15 | 18 |
| | Flexural modulus | MPa | | 2000 | 2100 | 1800 | 1200 |

### [Table 4]

**(Table 4)**

| | | | | Ex. 12 | Ex. 13 | Ex. 14 | Ex. 15 | Comp. Ex. 9 | Comp. Ex. 10 | Comp. Ex. 11 | Comp. Ex. 12 | Ref. Ex. 2 |
|---|---|---|---|---|---|---|---|---|---|---|---|---|
| Composition | Polyacetal resin (C) | Added amount | Parts by weight | 90 | 90 | 90 | 90 | 90 | 90 | 90 | 90 | 90 |
| | Modifier | Type | - | M-1 | M-2 | M-3 | M-4 | M-5 | M-6 | M-7 | M-8 | - |
| | | Added amount | Parts by weight | 10 | 10 | 10 | 10 | 10 | 10 | 10 | 10 | 0 |
| | Formaldehyde scavenger (D-1) | Added amount | Parts by weight | 0.12 | 0.12 | 0.12 | 0.12 | 0.12 | 0.12 | 0.12 | 0.12 | 0.12 |
| | Formaldehyde scavenger (D-2) | Added amount | Parts by weight | 0.05 | 0.05 | 0.05 | 0.05 | 0.05 | 0.05 | 0.05 | 0.05 | 0.05 |
| | Total amount (µmol) of reactive group contained in formaldehyde scavenger with respect to 1 g of total of polyacetal resin modifier and polyacetal resin (C) | | | 32.3 | 32.3 | 32.3 | 32.3 | 32.3 | 32.3 | 32.3 | 32.3 | 32.3 |
| Properties | Formaldehyde emissions | µg/g-POM | | 1.8 | 1.7 | 1.5 | 2.0 | 2.6 | 6.9 | 40.4 | 2.7 | 1.0 |
| | Notched Charpy impact value | kj/m² | | 13 | 13 | 13 | 13 | 13 | 13 | 13 | 13 | 7 |
| | Flexural modulus | MPa | | 2000 | 2000 | 2000 | 2000 | 2000 | 2000 | 2000 | 2000 | 2800 |

### [Table 5]

**(Table 5)**

| | | | | Ex. 12 | Ex. 16 | Ex. 17 | Ex. 18 | Ex. 19 | Ex. 20 | Ex. 21 | Ex. 22 | Ex. 23 | Ex. 24 |
|---|---|---|---|---|---|---|---|---|---|---|---|---|---|
| Composition | Polyacetal resin (C) | Added amount | Parts by weight | 90 | 90 | 90 | 90 | 90 | 90 | 90 | 90 | 90 | 90 |
| | Modifier | Type | - | M-1 | M-1 | M-1 | M-1 | M-1 | M-1 | M-1 | M-1 | M-1 | M-1 |
| | | Added amount | Parts by weight | 10 | 10 | 10 | 10 | 10 | 10 | 10 | 10 | 10 | 10 |
| | Formaldehyde scavenger (D-1) | Added amount | Parts by weight | 0.12 | 0.12 | 0.20 | | | | | | 0.20 | |
| | Formaldehyde scavenger (D-2) | Added amount | Parts by weight | 0.05 | | | 0.20 | 0.10 | | | | 0.20 | |
| | Formaldehyde scavenger (D-3) | Added amount | Parts by weight | | 0.05 | | | | 0.20 | | | | |
| | Formaldehyde scavenger (D-4) | Added amount | Parts by weight | | | | | | | 0.20 | | | 0.03 |
| | Formaldehyde scavenger (D-5) | Added amount | Parts by weight | | | | | | | | 0.20 | | |
| | Total amount (pmol) of reactive group contained in formaldehyde scavenger with respect to 1 g of total of polyacetal resin modifier and polyacetal resin (C) | | | 32.3 | 33.6 | 46.5 | 17.8 | 8.9 | 23.0 | 15.5 | 21.4 | 64.3 | 2.3 |
| Properties | Formaldehyde emissions | µg/g-POM | | 1.8 | 2.2 | 1.7 | 1.1 | 1.8 | 1.5 | 1.4 | 1.5 | 1.1 | 6.0 |
| | Notched Charpy impact value | kj/m² | | 13 | 13 | 13 | 13 | 13 | 13 | 13 | 13 | 13 | 13 |
| | Flexural modulus | MPa | | 2000 | 2000 | 2000 | 2000 | 2000 | 2000 | 2000 | 2000 | 2000 | 2000 |

### [Table 6]

**(Table 6)**

| | | | | Ex. 25 | Ex. 26 | Ex. 27 | Ex. 28 | Ex. 29 | Ex. 30 | Comp. Ex. 15 |
|---|---|---|---|---|---|---|---|---|---|---|
| Composition | Polyacetal resin (C) | Added amount | Parts by weight | 95 | 90 | 70 | 90 | 90 | 90 | 90 |
| | Modifier | Type | - | M-1 | M-1 | M-1 | M-2 | M-3 | M-4 | M-10 |
| | | Added amount | Parts by weight | 5 | 10 | 30 | 10 | 10 | 10 | 10 |
| | Tinuvin234 | Added amount | Parts by weight | 0.4 | 0.4 | 0.4 | 0.4 | 0.4 | 0.4 | 0.4 |
| | Tinuvin622SF | Added amount | Parts by weight | 0.3 | 0.3 | 0.3 | 0.3 | 0.3 | 0.3 | 0.3 |
| Properties | Formaldehyde emissions | µg/g-POM | | 12.2 | 13.1 | 18.9 | 12.1 | 12.3 | 14.1 | 11.1 |
| | Notched Charpy impact value | kj/m² | | 12 | 13 | 18 | 13 | 13 | 13 | 12 |
| | Flexural modulus | MPa | | 2100 | 2000 | 1200 | 2000 | 2000 | 2000 | 2000 |
| | Weather resistance (time to crack occurrence) | Hours | | 300 | 300 | 360 | 300 | 300 | 300 | 120 |

As indicated in Tables 2 to 5, it can be seen that the polyacetal resin modifier in accordance with an embodiment of the present invention, when mixed with the polyacetal resin (C), makes it possible to provide a polyacetal resin composition that can provide a molded product which (a) achieves low VOC emissions (formaldehyde emissions) and (b) has good impact resistance.

### Industrial Applicability

A polyacetal resin composition using the polyacetal resin modifier in accordance with an embodiment of the present invention can be suitably used in electric/electronic applications, automotive component applications, and industrial equipment applications. A polyacetal resin composition using the polyacetal resin modifier in accordance with an embodiment of the present invention can be suitably used in, for example: mechanical components of driving parts of audiovisual equipment; dishwashing machine handles; speaker grilles; propellers for washing machine tub agitation; switches and gears of office automation equipment; automotive wiper motor system gears, regulator handles, inner door handles, door lock side covers, shift levers, heater fans, pipe holders, power window regulators, seatbelts, power seat gears, and sunroofs; clips, fasteners, and screws; and belt conveyors, chains, and torque limiters of conveyors of industrial equipment.

## Claims

1. A polyacetal resin modifier comprising:
a rubber-containing graft copolymer (A); and a polymer compound (B) that has a glycidyl group,
the rubber-containing graft copolymer (A) having an elastic body and a graft part which is grafted to the elastic body,
the graft part being constituted only by a structural unit which is derived from a vinyl-based monomer that does not have a reactive functional group,
a mass ratio (parts by mass of the elastic body / parts by mass of the graft part) of the elastic body and the graft part being 60/40 to 95/5,
a contained amount of elemental chlorine in the polyacetal resin modifier being 1 ppm to 170 ppm with respect to mass of the polyacetal resin modifier,
a contained amount of elemental calcium in the polyacetal resin modifier being 1 ppm to 780 ppm with respect to the mass of the polyacetal resin modifier,
a mixture that is constituted by 10 parts by mass of the polyacetal resin modifier and 100 parts by mass of deionized water having a pH of 6.0 to 8.0.

2. The polyacetal resin modifier as set forth in claim 1, wherein the polymer compound (B) is at least one selected from among epoxidized soybean oil and epoxidized castor oil.

3. The polyacetal resin modifier as set forth in claim 1, wherein the elastic body is constituted only by a (meth)acrylate-based rubber.

4. The polyacetal resin modifier as set forth in claim 1, wherein a contained amount of an epoxy group in the polyacetal resin modifier is 15 µmol/g to 180 µmol/g.

5. The polyacetal resin modifier as set forth in claim 1, wherein a contained amount of the polymer compound (B) in the polyacetal resin modifier is not less than 0.1 parts by mass and not more than 5.0 parts by mass with respect to 100 parts by mass of the rubber-containing graft copolymer (A).

6. The polyacetal resin modifier as set forth in claim 1, wherein the polyacetal resin modifier is a powdery and/or granular material.

7. A polyacetal resin composition comprising: a polyacetal resin modifier as set forth in any one of claims 1 to 6; and a polyacetal resin (C).

8. The polyacetal resin composition as set forth in claim 7, wherein, in a case where the total of the polyacetal resin modifier and the polyacetal resin (C) is represented as 100% by mass, the polyacetal resin modifier is 3% by mass to 80% by mass, and the polyacetal resin (C) is 20% by mass to 97% by mass.

9. The polyacetal resin composition as set forth in claim 7, further comprising a formaldehyde scavenger.

10. The polyacetal resin composition as set forth in claim 9, wherein:
the formaldehyde scavenger includes a reactive group that has reactivity with respect to formaldehyde; and
a contained amount of the formaldehyde scavenger in the polyacetal resin composition is an amount such that the reactive group is not less than 3.0 µmol with respect to 1 g of the total of the polyacetal resin modifier and the polyacetal resin (C).

11. The polyacetal resin composition as set forth in claim 9, wherein the formaldehyde scavenger is one or more selected from the group consisting of a hydrazide compound, a hydrazone derivative of a hydrazine compound, a guanamine compound, and a urea compound.

12. A method for producing a polyacetal resin modifier, comprising:
a polymer compound (B) addition step of adding a polymer compound (B), having a glycidyl group, and which is in an emulsified state, to an aqueous latex which contains a rubber-containing graft copolymer (A);
a coagulation step of adding calcium chloride to the aqueous latex which is obtained from the polymer compound (B) addition step, thereby obtaining coagulated material which contains the rubber-containing graft copolymer (A) and the polymer compound (B); and
a washing step of washing the coagulated material which is obtained in the coagulation step,
the rubber-containing graft copolymer (A) having an elastic body and a graft part which is grafted to the elastic body,
the graft part being constituted only by a structural unit which is derived from a vinyl-based monomer that does not have a reactive functional group,
a mass ratio (parts by mass of the elastic body / parts by mass of the graft part) of the elastic body and the graft part being 60/40 to 95/5,
the aqueous latex having a pH of 5 to 9.
